# EUROPEAN PATENT APPLICATION

(11) **EP 4 806 250 A1**
(43) Date of publication of application: **16.09.2026**
(21) Application number: 26165037.8
(22) Date of filing: 16.03.2026
(51) Int. Cl.: A01C 21/00, C05F 11/08

(54) **A MYCELIUM-BASED STRUCTURE FOR AGRICULTURAL REGENERATION AND SOIL RESTORATION BY REMOTE DEPLOYMENT AND METHOD OF PRODUCTION OF SAID STRUCTURE**

(30) Priority: 14.03.2025 EP 25163874
(71) Applicant: MycoNest Kft., 1094 Budapest (HU)
(72) Inventor: Tóth, Alex Mihály, 5462 Cibakháza (HU)
(74) Representative: Poljak, Michal

(57) **Abstract**

The present invention relates to a mycelium-based structure for agricultural regeneration and soil restoration by remote deployment, comprising: mycelium of at least one fungus; a substrate of discrete particles bonded together by the mycelium, wherein the substrate comprises biomass; and a porous carrier. The structure comprises: 1 to 20 wt. % of the mycelium, 10 to 85 wt. % of the substrate and 1 to 85 wt. % of the porous carrier. The present invention further relates to a method for production of the mycelium-based structure.

## Description

### Field of technology

This invention relates to a mycelium-based structure for agricultural regeneration and soil restoration by remote deployment. The invention relates to active drivers of ecological regeneration and soil health improvement, aligning renewable energy production with environmental sustainability. This invention relates to a mycelium-based structure as a versatile ecological restoration tool for dispersing nutrients and soil amendments in degraded environments.

### Background of the invention

Wood-decay fungi are fungal species that digest moist wood, causing it to rot. Wood-decay fungi can be classified according to the type of decay that they cause as brown rot, soft rot and white rot fungi. Each type produces different enzymes, can degrade different plant materials and can colonise different environmental niches. Brown rot and soft rot fungi both digest cellulose and hemicellulose but not its lignin, whereas white rot fungi digest lignin as well. Within the context of this invention, white rot fungi are lignocellulose-degrading fungi.

*Pleurotus ostreatus,* a wood-decay fungus of white rot type and commonly known as oyster mushroom or oyster tree mushroom, has shown significant potential in being cultivated on an extensive variety of lignocellulosic waste materials generated from farming and forestry practices and it is one of the top three cultivated edible mushroom species in the world.

*Pleurotus pulmonarius,* a wood-decay fungus of white rot type and commonly known as oyster phoenix mushroom, and *Ganoderma lucidum,* a wood-decay fungus of white rot type and commonly known as reishi, varnished conk or ling chih, are similar to *P. ostreatus,* in terms of their preferences for digesting lignocellulosic waste materials.

Mycelium is a vegetative body and filamentous root-like structure of a fungus, such as *P*. *ostreatus* or *P*. *pulmonarius.* Fungal spawn is a medium present in fungal tissue that propagates the fungus. A substrate suitable for growing mycelium of *P*. *ostreatus* or *P. pulmonarius* is generally considered to have a high content of lignocellulosic material. Both *P. ostreatus* and *P*. *pulmonarius* are able to break down lignin, since they produce enzymes such as laccase, manganese oxidizing peroxidase, versatile peroxidase and aryl-alcohol oxidase. These enzymes allow *P. ostreatus* and *P. pulmonarius* to be easily grown on various lignocellulosic substrates, including paper materials, sawdust and agricultural waste.

The publication of Matthew William Reiss, II titled "Pleurotus ostreatus production on Cannabis sativa, L. (Industrial Hemp) Residues for Edible Mushrooms and Mycelium-based Composites" explores various combinations of substrates (hemp hurd, bast fibres, soybean hull, wheat straw and white oak sawdust) for cultivating mushroom fruiting bodies of *P*. *ostreatus. P. ostreatus* cultivated on hemp hurd emerges as a particularly advantageous combination due to a high fungal biomass growth rate and a short colonisation period of the mushroom. The publication also explored particular applications of such combinations in insulation bricks, acoustical panels and biodegradable planter pots.

There are mycelium-based birdhouses, insect hotels or other wildlife sheltering structures known in the prior art.

The mycelium structures linked at https://www.instructables.com/Ecovative-GIY-Birdhouse/ and https://amaseproject.eu/wp-content/uploads/2024/07/Amase_Mycelium_english.pdf (available on 14 March 2025) disclose an egg-shaped birdhouse and an insect hotel laid in a baking tray, using a mycelium-based material marketed under Grow it Yourself^{®} or Grow bio^{®}, see the following links: https://grow.bio/products/grow-it-yourself-material?srsltid=AfmBOorUm6I2JIkSjRZ0ePfOrDkLU93AgRO-r83MF1x-IRqlXkjJ0HdV; https://cdn.shopify.com/s/files/1/1507/3978/files/GIY_SDS_fc1c5571-b809-4446-95f9-5988d5512b73.pdf?v=1664373515; https://grow.bio/pages/spec-sheet and https://cdn.shopify.com/s/files/1/1507/3978/files/GIY-SpecSheet-2022-interactive_a32de1b2-5dd7-43a3-8366-dd9d38ffcdee.pdf?v=1705598786 (available on 14 March 2025). The material contains 6-15 wt. % proprietary component (implicitly the mycelium precursor), 40-45 wt. % corn stover, 40-45 wt. % hemp pith (or hemp hurd) and 1-5 wt. % wheat flour. The corn stover and the hemp pith seem to have a filler and a support function for the structure. The egg-shaped mycelium birdhouse is shown hanging on a string. Disadvantageously, these shapes are not suitable for easy hanging on horizontal bars, diagonal bars or vertical pillars of solar panels and are too bulky to be shipped efficiently. The use of hemp pith (hemp hurd, being a wooden refuse removed during processing hemp, as opposed to the fibres) would not provide enough reinforcement to a hook-like mycelium structure.

The mycelium structure linked at https://www.aalto.fi/en/contemporary-design/mycelium-birdhouse (available on 14 March 2025) is a cylindrically shaped birdhouse with a removable top cap. The cylindrically shaped birdhouse is shown attached to a tree trunk with a string guided via a through hole in the back of the structure. The contents of the mycelium substrate material are not provided.

The mycelium structure linked at https://www.mediamatic.net/en/page/384488/building-with-mycelium (available on 14 March 2025) is a box shaped birdhouse. The contents of the mycelium substrate material are not provided.

The mycelium structure linked at https://www.behance.net/gallery/109569939/MYCOmoss-BirdHouse (available on 14 March 2025) is an egg-shaped birdhouse. The material contains a mycelium precursor and straw as a filler. The egg-shaped birdhouse is shown attached to a tree trunk.

The mycelium structure linked at https://www.futurematerialsbank.com/material/mycelium-17/ (available on 14 March 2025) is an egg-shaped or an upside-down U-shaped bee hotel. The material contains a mycelium precursor and wood sawdust as a filler. The upside-down U-shaped bee house is shown attached to a tree trunk, suspended on a wooden block.

The mycelium structures linked at https://www.cccneb.edu/alumni-foundation/alumni/community-connection/fall-2020-community-connection/fungi-fascination/; https://thekidshouldseethis.com/post/katy-ayers-mushroom-canoes-bee-hotel-mycelium-video and https://thebluebirdgirl.wixsite.com/thebluebirdgirl/mycelium-grown-bee-hotels (available on 14 March 2025) are box-shaped or hexagonal-shaped bee hotels. The contents of the mycelium substrate material are not provided. The mycelium has been shown to interact with bee excretions to form a juice beneficial to bees when drunk by them.

The mycelium structure linked at https://www.kellyobrien.art/pollinator-sanctuary (available on 14 March 2025) is an egg-shaped or a box-shaped bee hotel. The contents of the mycelium substrate material are not provided.

The mycelium structure linked at https://www.euronews.com/green/2021/05/27/the-homegrown-hive-that-could-save-ireland-s-bees (available on 14 March 2025) is a cylindrically shaped beehive. The material contains a mycelium precursor and hay or wood chips as a filler. The beehive has angular wooden (bamboo) support rings and is suspended on a tree by means of an upwardly protruding steel pin with a hole, having a hook placed in it.

The mycelium structure linked at https://upload2.beebreeders.com/upload/06.12.2021/sm_huge/bcd6c8a19853eca609347bf7e9e 1c80e.jpg (available on 14 March 2025) is an egg-shaped birdhouse. The material contains a mycelium precursor and sawdust, wood chips or straw as a filler. The egg-shaped birdhouse has an inner and an outer shell, each shell having a bottom and a top portion separated by a spacer. The outer shell is supported on a mounting ring, which is shown suspended on a tree by means of strings.

The mycelium structure linked at https://upload2.beebreeders.com/upload/28.06.2020/sm_huge/c01e96b5ad13899b34af7cf1dcc 73ff5.jpg (available on 14 March 2025) is an irregular, roofed, box-shaped birdhouse. The material contains a mycelium precursor and non-specific agricultural waste as a filler. The box-shaped birdhouse is shown hanging from a tree.

The European patent EP 2094856 B1 discloses a generic self-supporting composite material (such as in the form of a panel or packaging) comprising a substrate of discrete particles and having a network of interconnected mycelia cells extending through and around said discrete particles and bonding said discrete particles together. It further discloses a method of making such a composite material by:
a. forming an inoculum including a preselected fungus;
b. forming a mixture of a substrate of discrete particles and a nutrient material, said nutrient material being capable of being digested by said fungi;
c. adding said inoculum to said mixture; and
d. allowing said fungus to digest said nutrient material in said mixture over a period sufficient to grow hyphae and to allow said hyphae to form a network of interconnected mycelia cells through and around said discrete particles thereby bonding said discrete particles together to form a self-supporting composite material.

The US patent US 11277979 B2 discloses a generic method of growing a mycological biopolymer material by:
a. placing nutritive substrate and a fungus in a cavity of a tool and covering it with a lid having an outlet open to fresh air; and
b. allowing the fungus to grow in the cavity by consuming the nutritive substrate, thereby producing CO₂ which gradually diffuses by the outlet.

The European patent applications EP 4056674 A1 and EP 4305150 A1 disclose a one-step and a two-step colonization method of manufacturing a mycelium-based construction and/or insulation material by:
a. providing a fungus and a substrate;
b. introducing or preparing a mixture of the fungus and the substrate in a mould;
c. allowing the fungus to grow to form a network of hyphae through the mixture to form a mycelium composite;
d. taking the composite from the mould;
e. shredding the composite to chunks; and
f. optionally, introducing the chunks into an enclosure and allowing the fungus to grow to form a network of hyphae around and/or through the chunks to form a further composite.

They further disclose a construction and/or insulation material (such as a plate, a panel, a load-bearing element for frame construction, or an insulation layer or wall), comprising the chunks of the mycelium composite.

A similar two-step colonization method of manufacturing a mycelium-based product is disclosed by the Chinese patent application CN 111990171 A.

The disadvantages of the above European and Chinese patent documents include a lack of any porous carrier.

The below mentioned patent documents all disclose glass bottles filled with mycelium for breeding larvae of insects. The mycelium substrate is intended to be consumed by the larvae and has a generally cylindrical shape derived from the shape of the glass bottle.

The Japanese patent JP 3682240 B2 combines the mycelium substrate with wood chips as a filler. The bottle is divided into segments with partitions, which can be made of hemp fibres. The hemp fibres do not function as a support within the mycelium substrate. The Japanese patent application JP 2003000099 A and the Japanese patent JP 3394974 B2 combine the mycelium substrate with wood chips as a filler. The Japanese patent applications JP 2014236708 A and JP 2006075143 A show an assemblable bottle filled with a mycelium substrate. When disassembled, the mycelium substrate has a cylindrical shape.

Disadvantages of all the above-mentioned mycelium-based birdhouses or insect hotels include inefficient shipping due to their bulkiness.

The Chinese patent CN 114617028 B discloses a cup or pot for transplanting plants, in particular tobacco plants. The pot is made of a material comprising plant waste and mycelium and is described to have a prolonged positive effect on the soil it is buried in, thus improving plant habitat. This effect is linked to a slow release fertilizer on the one hand and the mycelium in the pot material, which, during the degradation of the pot in the soil, is set free in the soil and can deploy its known beneficial effects. Moreover, pots can be easily transported in a stacked fashion. Disadvantageously, the pot does not have a shape suitable for agricultural regeneration and soil restoration.

The use of mycelium as fertilizer has also been reported in the international patent application WO 2025046755 A1, disclosing a mycelium-based control agent of a pathogen Foc TR4 of Panama disease of Cavendish bananas.

Further disadvantages of all the above-mentioned mycelium-based structures is their difficult deployability in degraded environments.

Publications by Zheng et al. titled "Self-immobilised biochar fungal pellet combined with bacterial strain H29 enhanced the removal performance of cadmium and nitrate" (Bioresour Technol. 2021;341:125803., available at https://doi.org/10.1016/j.biortech.2021.125803 on 16 March 2026) and "Biochar fungal pellet based biological immobilization reactor efficiently removed nitrate and cadmium" (Chemosphere. 2022;296:134011., available at https://doi.org/10.1016/j.chemosphere.2022.134011 on 16 March 2026) disclose a self-immobilised fungal pellet comprising biochar and a bacterial strain for removing cadmium and nitrate from soil environments. The biochar fungal pellet is produced by inoculating fungal spores into a liquid medium comprising biochar powder, and self-immobilising at pH = 6,8, 30 °C, 160 rpm, 5 days. There is no biomass-based substrate used in the liquid medium, causing a lack of structural reinforcement in the pellet.

There is therefore a need in the prior art and the object of the present invention is to provide a mycelium-based structure suitable for agricultural regeneration and soil restoration by remote deployment, with a shape allowing easy deployability in degraded environments.

### Summary of the invention

In the first aspect of the invention, the object of the present invention is achieved by a mycelium-based structure according to claim 1. The preferred embodiments of the mycelium-based structure are disclosed in claims 2 to 10.

### Mycelium-based structure

The mycelium-based structure comprises: mycelium of at least one fungus; a substrate of discrete particles bonded together by the mycelium; and a porous carrier, optionally impregnated with at least one nutrient. The substrate comprises biomass (such as plant-derived biomass, insect-derived biomass and/or animal-derived biomass) and the porous carrier is preferably biodegradable or of natural origin (e. g. minerals, rocky substances). Such a composition of fully renewable biomaterials forms a lightweight yet durable structure. Within the context of this invention, mycelium means a network of interconnected mycelia cells, extending through and around the discrete particles of the substrate. The mycelium in the final mycelium-based structure means a network of interconnected and inactivated mycelia cells, extending through and around the discrete particles of the substrate.

Optionally, the fungus is any of *Pleurotus ostreatus, Pleurotus pulmonarius, Pleurotus populinus, Pleurotus eryngii, Ganoderma lucidum, Trametes versicolor, Phanerochaete chrysosporium, Lentinula edodes, Hypsizygus ulmarius* or a combination thereof. Optionally, the fungus is a wood-decay fungus. A combination means a simple mixture or a genetic hybrid of at least two fungi.

The natural decomposition properties of the mycelium enrich soil with organic nutrients, aiding local flora and avoiding waste accumulation. The structure is free from any applied coatings, paints, or synthetic sealants, ensuring that no microplastics or harmful chemicals are released into the environment during its lifecycle or decomposition.

As the structure gradually breaks down, it enhances soil microbial activity by fostering beneficial fungi and bacteria that contribute to nutrient cycling and organic matter decomposition. The porous nature of the material aids in soil aeration, improving root penetration and oxygen exchange. Additionally, the structure retains moisture, helping prevent soil desiccation and creating a more favourable microclimate for plant growth.

The average decomposition period is approximately 20-24 months to full decomposition under continental European climate and temperature conditions, during which time it enriches the soil with organic matter, enhancing fertility, improving soil structure, and supporting native vegetation growth. Partial decomposition can be seen as soon as after 8-12 months. The breakdown process also contributes to carbon sequestration, temporarily storing atmospheric carbon within the soil ecosystem.

Gradual decomposition keeps the integrity of the structure for one to two full seasons before fully integrating into the soil, leaving no residual waste while actively improving soil health and biodiversity.

Moreover, mycelium is a fire-retardant material (up to 1400 °C), which reduces risk in proximity to solar panels. Moderate waterproofing properties of mycelium ensure functionality through varying weather conditions (rain, humidity) while retaining biodegradability.

Natural pigments or bio-based dyes can be introduced into the soaking water during the hydration process to infuse the final structure with colour without affecting fungal colonization. Similarly, the structures can be painted with the pigments or dyes after colonization or even after drying. This allows for biodegradable, non-toxic coloration tailored for specific ecological or aesthetic applications. This also allows the structure to adopt earth-tone hues or specific colours that blend with natural habitats or serve functional marking purposes (e. g. differentiating habitat types or indicating degradation stages).

The underlying idea of the mycelium-based structure according to the present invention is the composition of the structure, comprising: 1 to 20 wt. % of the mycelium, 10 to 85 wt. % of the substrate and 1 to 85 wt. % of the porous carrier. Preferably, the structure comprises: 1 to 20 wt. % of the mycelium, 30 to 85 wt. % of the substrate and 1 to 50 wt. % of the porous carrier. Preferably, the structure comprises: 5 to 15 wt. % of the mycelium (such as 10 wt. %), 45 to 75 wt. % of the substrate (such as 70 wt. %) and 10 to 40 wt. % of the porous carrier (such as 20 wt. %). These wt. % ranges allow reliable colonization of the substrate while maintaining sufficient structural integrity. Such a structure can be deployed remotely (such as by aerial deployment), while introducing the beneficial effects of the mycelium and the porous carrier in agricultural regeneration and soil restoration. Upon deployment in soil, the structure not only releases nutrients gradually but also contributes organic matter and beneficial porous carbon to the soil.

The porous carrier serves as a scaffold, a structural and environmental modifier within soil, improving soil aggregation, moisture retention, aeration, providing microscale habitat for soil microorganisms, and temporarily adsorbing soil nutrients (preventing nutrient leaching) and optionally providing a suitable carrier for nutrient impregnation. In the herein described structures, porous materials, such as biochar, can additionally contribute to the physical and environmental performance of the structure during its active use phase. Their internal pore structure can improve thermal buffering and insulation, moderate moisture fluctuations and increase the mechanical stability and rigidity of the mycelium-based composite. This may help maintain structural integrity and create more stable microclimatic conditions within the habitat cavity, which can be beneficial for insects or other small organisms using the structure before the material gradually degrades.

Inactivated mycelium retains extracellular enzymes such as chitinases, proteases and glucanases which are secreted during fungal growth. These enzymes are often stable enough to survive drying and can become briefly active again when exposed to moisture. Upon rehydration, they catalyse the breakdown of remaining organic compounds within the matrix, releasing bioavailable molecules such as amino acids, sugars, and small peptide, thus serving as initial nutrient sources and microbial attractants. The biochemical breakdown initiated by rehydrated enzymes creates a localized nutrient pulse that acts as a signal and food source for soil microbes. These chemical cues stimulate colonization by native soil bacteria and fungi. This mechanism closely mimics natural inactivated fungal mass dynamics, where dead fungal tissue becomes the first substrate colonized in early ecological succession.

Furthermore, porous carrier particles (such as biochar particles) provide surface area to which enzymes can bind. Research suggests that certain enzymes may retain partial functionality when adsorbed onto biochar, offering a protective microenvironment that delays their degradation. This extends the catalytic window after hydration, enhancing the biological activity of the matrix. Due to its high internal surface area and porosity, biochar offers protective refuges for microorganisms, including fungal hyphae, bacterial colonies and spores. These microsites retain moisture and nutrients, facilitating microbial persistence and growth within and around the mycelium-based structure. What is more, biochar plays a buffering role in the soil microenvironment. It helps neutralize soil acidity, regulate pH, and moderate local temperature and moisture fluctuations.

These properties support more favourable conditions for microbial activity and enzyme function during the critical early stages after deployment. The combination of biochar and inactivated mycelial mass is known to enhance microbial diversity and abundance in soils. This synergistic pairing replicates ecological conditions seen in natural post-disturbance environments, such as after forest fires or fungal diebacks, where microbial blooms are triggered by the availability of stable carbon and organic matter.

The underlying idea of the invention is further explained by the limitations of the above wt. % ranges. Too little mycelium (<1 wt. %) leads to insufficient fungal network formation, weak binding between substrate particles and higher contamination risk during colonization. Too much mycelium (>20 wt. %) results in no significant additional structural benefit, inefficient use of substrate nutrients and irregular growth patterns. Too little substrate (<10 wt. %, in particular <30 wt. %) causes insufficient nutrient base for fungal growth, incomplete colonization of the structure. Too much substrate (>85 wt. %) reduces the proportion of porous carrier, limits the functional effects related to nutrient adsorption or water retention. Too little porous carrier (<1 wt. %) has a negligible effect on nutrient adsorption, microbial habitat formation, or water retention. Too much porous carrier (>85 wt. %, in particular >50 wt. %) means lack of substrate for fungal colonization, reduced mechanical cohesion of the structure and that mycelium cannot effectively bind the structure. Experimental observations suggest that biochar contents up to approximately 50 wt. % still allow the formation of a stable mycelium-bound composite, although lower percentages (e. g. 10 to 30 wt. %) are more practical for reliable colonization of the mycelium.

In a particular embodiment, the structure comprises: 1 to 10 wt. % of the mycelium (such as 8 wt. %), 5 to 15 wt. % of the substrate (such as 12 wt. %) and 75 to 85 wt. % of the porous carrier (such as 80 wt. %). The porous carrier, and optionally any nutrient material, are introduced after partial or complete colonization of the mycelium-based structure. A mycelium-bound shell or scaffold is first formed by colonizing the substrate with the mycelium. The shell may include one or more openings, cavities or insertion ports through which the porous carrier is introduced. After introduction of the porous carrier, and optionally any nutrient material, the mycelium may be allowed to continue growing for a short period, thereby partially overgrowing and sealing the insertion opening before the structure is subsequently dried or otherwise inactivated. This approach enables the separate formation of a structural mycelium shell and the subsequent loading of functional materials, providing flexibility in manufacturing and allowing higher concentrations or different particle sizes of porous carrier materials to be incorporated without interfering with initial mycelial colonization.

Within the context of this invention, *Pleurotus ostreatus* is known as oyster mushroom, oyster fungus, hiratake or pearl oyster mushroom, *Pleurotus pulmonarius* is known as Indian oyster, Italian oyster, phoenix mushroom or lung oyster, *Pleurotus populinus* is known as aspen oyster mushroom, *Pleurotus eryngii* is known as king trumpet mushroom, French horn mushroom, eryngi, king oyster mushroom, king brown mushroom, boletus of the steppes, trumpet royale or ali'i oyster, *Ganoderma lucidum* is known as reishi, varnished conk or ling chih, *Trametes versicolor* is known as turkey trail, *Phanerochaete chrysosporium* is known as a model white rot fungus, *Lentinula edodes* is known as shiitake or Chinese/black mushroom and *Hypsizygus ulmarius* is known as elm oyster mushroom.

Within the context of this invention:
- *Pleurotus ostreatus* is suitable due to its slow colonization rate, good mechanical properties, and compatibility with agricultural residues and wood chips;
- *Pleurotus pulmonarius* is suitable due to its fast colonization rate, strong substrate binding, structural durability, and compatibility with lignocellulose-rich materials;
- *Pleurotus populinus* is suitable due to its fast colonization rate, strong substrate binding, structural durability, and compatibility with lignocellulose-rich materials;
- *Pleurotus eryngii* is suitable due to its fast colonization rate, strong substrate binding, structural durability, and compatibility with lignocellulose-rich materials;
- *Ganoderma lucidum* is suitable due to its slow colonization rate, high mechanical strength, strong, dense mycelial network, high durability, and compatibility with lignocellulosic residues (such as sawdust, agricultural waste);
- *Trametes versicolor* is suitable due to its medium colonization rate, effective lignin degradation, contributing to composite durability, high resistance to environmental fluctuations, enhancing longevity in outdoor conditions, and compatibility with various lignocellulosic substrates;
- *Phanerochaete chrysosporium* is suitable due to its fast colonization rate, efficient lignin degradation, promoting biodegradability and faster structural decomposition in soil improvement applications, and compatibility with wood-based substrates;
- *Lentinula edodes* is suitable due to its slow colonization rate, strong, fibrous mycelial growth enhancing tensile strength and improving mechanical resilience, and compatibility with hardwood sawdust and straw; and
- *Hypsizygus ulmarius* is suitable due to its medium to fast colonization rate, aggressive cellulose breakdown, contributing to structural integrity, and compatibility with agricultural waste, sawdust.

The above-listed fungal species are all suitable based on their enzymatic capabilities, colonization behaviour and substrate compatibility.

Optionally, the mycelium-based structure comprises mycelium of *Pleurotus ostreatus* and *Pleurotus pulmonarius.* As it will be explained in more detail below, *P. pulmonarius* is a fast-colonizing, cellulose-degrading strain, which spreads rapidly within the first five to seven days, outcompetes any contaminants while efficiently degrading cellulose and hemicellulose, and softens the substrate. On the other hand, *P. ostreatus* is a slow-colonizing, lignin-degrading strain, which develops a denser mycelial network, binds the substrate more effectively, specializes in lignin degradation, reinforces structural integrity and improves durability. The integration of these fungal strains results in a durable, well-balanced mycelial network that provides structural cohesion and biodegradability.

Optionally, the mycelium-based structure comprises mycelium of *Ganoderma lucidum* and *Pleurotus pulmonarius.* As it will be explained in more detail below, *P. pulmonarius* is a fast-colonizing, cellulose-degrading strain, which spreads rapidly within the first five to seven days, outcompetes any contaminants while efficiently degrading cellulose and hemicellulose, and softens the substrate. On the other hand, *G. lucidum* is a slow-colonizing, lignin-degrading strain, which develops a denser mycelial network, binds the substrate more effectively, specializes in lignin degradation, reinforces structural integrity and improves durability. The integration of these fungal strains results in a durable, well-balanced mycelial network that provides structural cohesion and biodegradability.

Optionally, the shape of the mycelium-based structure is selected from spherical, cylindrical, ellipsoidal, hemispherical, polygonal, a granule or a pellet. The pellet or granule can have a spherical, cylindrical, ellipsoidal, hemispherical or polygonal shape. The shape is therefore rollable for easy rolling across diverse terrains such as sandy deserts, rocky plains, or sloped landscapes. This versatility allows for deployment in a variety of ecological and geographical conditions. The rollable shape ensures continuous movement facilitated by external forces, such as wind or gravity, allowing the device to cover broad areas with minimal intervention. This makes it ideal for use in remote or inaccessible regions where traditional deployment methods are impractical. In particular, a cylindrical shape appears to be automation-friendly.

Optionally, the substrate is selected from a group consisting of hemp, hemp hurd, straw, hay, wood sawdust, wood chips, bagasse, corn husks, corn cobs, coconut coir, spent coffee grounds or a combination thereof.

Optionally, the substrate is hemp hurd. The substrate generally serves as the foundation for fungal colonization and structural integrity. Hemp hurd appears a suitable choice for its high lignocellulosic content (cellulose, hemicellulose, and lignin), structural durability and even moisture retention and oxygen porosity properties, ensuring rapid growth while maintaining a stable, mouldable structure and preventing anaerobic conditions that could hinder mycelial development.

Other suitable alternatives to hemp hurd appear to be:
- bagasse, providing a balance of cellulose and hemicellulose, which supports fungal growth while maintaining a stable, fibrous structure;
- corn husks and/or corn cobs, providing a fibrous, porous structure suitable for fungal colonization and enhancing airflow and moisture retention, thus creating an optimal environment for mycelium colonization;
- coconut coir, retaining moisture well and providing a fine, flexible matrix that supports dense mycelial networks while resisting compaction;
- straw and/or hay, which have long, interwoven fibres, allowing for good structural integrity and enhanced aeration, promoting even colonization;
- wood sawdust and/or wood chips, offering lignocellulosic richness, which mycelium effectively breaks down while forming a strong, durable matrix for structural applications; and
- spent coffee grounds, providing high lignocellulosic content, structural porosity, moisture retention and biodegradability in addition to being suitable for a 3D printing method.

All above-listed materials share key properties that make them suitable for mycelium-based structures: high lignocellulosic content for fungal nutrition, structural porosity for airflow, moisture retention for sustained colonization, and biodegradability ensuring environmental compatibility.

Optionally, the porous carrier is selected from biochar, activated carbon, lignite-derived humic acid or a derivative thereof, zeolite, diatomaceous earth, perlite, vermiculite, bentonite, montmorillonite), pumice or basalt, providing a suitable carrier for nutrient impregnation. More generally, the porous carrier is selected from carbonaceous materials, mineral silicates, clay minerals, volcanic minerals or humic substances.

Optionally, the porous carrier is impregnated with nutrients, such as nitrogen, phosphorous, potassium and/or trace elements (e. g. magnesium, calcium, sulphur, zinc, manganese, iron, copper, boron, molybdenum) for facilitating controlled and prolonged nutrient release into the soil as the mycelium structure biodegrades over time. The porous carrier, due to its high porosity, provides a stable, environmentally friendly and efficient nutrient reservoir. Nutrient impregnation enhances overall ecological restoration effectiveness. If the initial nutrient concentration is too high, it could create osmotic stress or toxicity that inhibits the fungal growth. Thus, in practice, the soaking solution strength is tuned so that the fungus can still colonize effectively. The fungus will consume a portion of the added nutrients (especially nitrogen and phosphorus) for its own biomass, which means those nutrients become organically bound in fungal cells rather than remaining in free mineral form.

Optionally, the porous carrier is not contacting the surface of the structure due to its sensitivity to humidity. In other words, the porous carrier is preferably covered completely with the mycelium.

Optionally, the porous carrier is impregnated with at least one soil amending agent which can be selected from nitrogen-fixing bacteria (e. g. Azospirillum sp., Azotobacter sp.), phosphate-solubilising bacteria (e. g. Pseudomonas sp., Burkholderia sp.), plant growth-promoting rhizobacteria (e. g. Pseudomonas sp., Burkholderia sp.), a mycorrhizal fungi (e. g. Glomeromycota sp.), algae (e. g. Spirullina sp.), cyanobacteria, compost tea, decomposing fungi (e. g. Trichoderma sp.), nematodes, protozoa or microbial consortia.

Optionally, the mycelium-based structure comprises an inner core comprising the porous carrier, and an outer shell comprising the remaining components (mycelium, substrate). The outer shell is therefore free of the porous carrier and the mycelium and/or the substrate can be comprised in the inner core as well. Mycelium acts as a binding material that holds the inner core components together and gradually degrades, enabling the controlled release of nutrients. The porous structure of the carrier, combined with mycelium's nutrient absorption and retention properties, enhances soil fertility, water retention and microbial activity over time.

The outer shell is therefore biodegradable and eco-friendly. Mycelium provides structural integrity during transport and deployment while also contributing organic matter to the soil as it decomposes. The outer shell is designed to degrade gradually, ensuring a controlled release of nutrients into the surrounding environment. During decomposition, the mycelium integrates with the soil, improving its organic content and water retention capacity. The outer shell shields the nutrient-rich, inner core from external elements such as moisture, UV radiation and physical damage during deployment. Its durability ensures the integrity of the device until it reaches its intended destination.

The inner core comprises a mixture of the porous carrier (such as biochar), at least one nutrient (such as nitrogen, phosphorous, potassium, magnesium, calcium, sulphur, zinc, manganese, iron, copper, boron, molybdenum), and optionally other soil-enhancing materials. These components are selected based on their ability to address specific soil deficiencies, improve fertility and support vegetation growth. Biochar acts as a stable carbon reservoir, enhancing soil structure, water retention, and microbial activity. Its porous structure creates microsites for storing nutrients and hosting beneficial microorganisms, fostering long-term soil health. Mycelium colonizes and binds the inner core, creating a cohesive structure that resists fragmentation during deployment. The mycelium's gradual degradation ensures a controlled and consistent release of nutrients over time. The inner core materials can be pre-treated to enhance their absorption and retention of essential elements, such as soaking biochar in nitrogen or phosphorus solutions to increase nutrient availability upon release.

The inner core can comprise a plurality of capsules, which can release specific nutrients or minerals at different intervals, enabling controlled and prolonged soil enrichment. Separate compartments for different nutrient types or soil amendments can be included to target specific soil deficiencies effectively. The inner core can comprise multiple layers of the nutrient-enriched porous carrier, mycelium and substrate, designed to decompose at varying rates to provide a sustained release of beneficial materials over time. The structure can comprise a plurality of randomly scattered bits of the porous carrier within the structure matrix, wherein in this case, the scattered bits can come also form part of the surface of the structure. Such a structure matrix can also form an outer shell with an inner core as described above.

The porous carrier can be in the form of dust, multiple small fragments and/or at least one solid piece. There might or might not be mycelium cross-linking the porous carrier. Once the mycelium in the outer shell collapses, the porous carrier can be released at a specific location. In general, the porous carrier can vary in composition and structure. It may comprise a pure substance, ranging from fine dust to a single solid piece, or it can be a mycelium-supported, cross-wired structure. Additionally, a combination is possible, where multiple smaller capsules or spheres within the matrix comprises the porous carrier in a pure or a mycelium-cross-linked form.

The size and weight of the device can be adjusted to suit specific requirements, such as soil conditions, wind patterns, or safety concerns. For instance, smaller, lightweight versions may be deployed in areas with high wind activity to prevent unintended damage (such as to local flora and fauna) or displacement, while larger versions can be used in stable regions to maximize nutrient distribution.

Optionally, the surface of the mycelium-based structure can be modified with grooves, ridges or perforations to regulate nutrient release and enhance interaction with the terrain. These features ensure even distribution of nutrients and improve the device's rolling efficiency. Textured surfaces or reinforced edges can be incorporated to improve mobility and ensure stability on uneven or rocky terrain.

Optionally, the mycelium-based structure comprises at least one through-hole and/or a cavity. Such a through-hole or a cavity can be drilled in the final (dried) structure or pre-formed in the mixture of fungal spawn, substrate and porous carrier prior to colonisation. Beneficial soil microbes, nematodes, protozoa, microbial consortia, fungal spore "starter" doses or biodegradable nail-shaped ampoules with a dose of liquid or solid material (soil microbes, fungal spores) can be placed inside such a through-hole or a cavity.

Optionally, the mycelium-based structure comprises a UV-resistant coating for sunny regions or a water-absorbing material for arid zones, to suit different climates.

Optionally, the mycelium-based structure comprises plant seeds, fungal spores, insect eggs and/or insect larvae (propagation or breeding material) embedded in the structure. The structure integrates a built-in propagation/breeding material dispersal feature, ensuring that the propagation/breeding material is shielded by the mycelium-substrate composite from early consumption by birds or rodents, while allowing for delayed, natural release during the final degradation phase. The propagation/breeding material is also insulated from moisture, extreme heat or early sprouting. The seeds can be native wildflower seeds, ensuring compatibility with local ecosystems and pollinator species. The plants emerging from these seeds can provide nectar and pollen for pollinator species, prevent soil erosion as native grasses and flowering perennials, and improve nitrogen fixation in the soil as leguminous nitrogen-fixing plants. The fungal spores can be mycorrhizal fungal spores. The insect eggs can be spider eggs. The insect larvae can be bee larvae. The methods of propagation/breeding material embedding are discussed further below.

Optionally, the mycelium-based structure comprises up to 5 wt. % of a hydrocolloid binder (such as xanthan gum agar, guar gum or carrageenan) for enhancing adhesion and improving consistency. The hydrocolloid binder can also support automation requiring pre-formed structures that are then further colonized together by providing sufficient structural integrity to prevent collapse in cavity-based moulding techniques.

Optionally, the mycelium-based structure comprises an outer protective coating, optionally made from cutin and/or beeswax, to enhance waterproofing properties of the structure. This approach provides effective water insulation while maintaining the structure's eco-friendly, microplastics-free and biodegradable nature.

Optionally, the mycelium-based structure comprises an outer coating comprising biostimulants or other biological products. Such an outer coating can be applied by being sprayed on or dipped in the final structure prior to deployment.

The thickness of the coating can range from 0.2 mm to 2 mm, depending on the application. Minimal waterproofing (app. 0.2-0.5 mm) can be used for terrestrial applications (e. g. solar parks, fences, balconies). Moderate waterproofing (app. 0.5-1 mm) can be used for high-humidity environments (e.g. wetlands, urban green roofs). Enhanced waterproofing (app. 1-2 mm) can be used for floating, completely or partially submerged applications (e.g. aquatic restoration, reef islands). Minimal and moderate waterproofing allows natural degradation while providing moisture resistance. Enhanced waterproofing ensures structural longevity in water-based environments, preventing premature collapse. Methods of introducing such a coating are described below.

In particular the enhanced waterproofing should include an even coating layer to prevent moisture absorption accelerating the breakdown of the structure. Several layers (even embedded in the structure) can be used for enhanced waterproofing, each with a different rate of decomposition in aquatic environments (e. g. a top layer decomposing faster than a bottom layer), securing marine colonisation before natural degradation.

Because a waterproof coating can alter the humidity microenvironment inside, risking altering species preferences, perforations or ventilation holes can be introduced in the coating to allow moisture control while maintaining insulation. For floating and underwater applications, the perforations can control water entry into the structure, preventing artificial buoyancy shifts.

Optionally, a plurality of the mycelium-based structures is connected by means of biodegradable ropes or fibres to form a two- or three-dimensional web of such structures. This can have potential uses in aquatic applications, where the structures are kept together in a larger assembly.

Optionally, the mycelium-based structure comprises any of the following wireless electronics for collecting data on habitat restoration: a camera (e. g. a low-power wildlife camera), a microphone, an acoustic sensor, a motion sensor, a temperature sensor, a humidity sensor and/or a light intensity sensor. Within the context of this invention, "electronics" also include plant-based and bio-based sensors.

The electronics can be inserted into pre-formed cavities or hollow sections of the structure after the material is fully produced. It can be secured with biodegradable plugs or adhesives to ensure it remains in place during deployment. This simplifies manufacturing by keeping the electronics and structural material separate, prevents exposure of the electronics to moisture and heat during mycelium growth or drying, and makes the electronics easily replaceable if they fail or need upgrading. Data can be transferred wirelessly via LoRa (Long Range), BLE (Bluetooth low energy), 4G or 5G technologies, or they can be stored in memory to be manually retrieved by an operator. The powering of the electronics can be done with rechargeable batteries, or energy harvesting from the environment (such as a small wind turbine or a solar panel).

Optionally, the mycelium-based structure comprises structural features for adjusting its buoyancy in freshwater and/or seawater. These can include mixing lightweight organic aggregates (e. g. expanded cork and/or perlite) into the mycelium matrix to increase buoyancy; incorporating denser biodegradable or natural elements (e. g. stones, sand, clay or natural resins) to fine-tune sinking rates, wherein these can be in the form of naturally accumulating sediment traps and/or gradually dispersing weighted inserts; adding air pockets or hollow chambers to prolong flotation before gradual water absorption; and/or using layered density variations (lighter outer layers, denser core) to manage water absorption. Freshwater is characterised by slower water absorption, meaning floating phases last longer, compared to seawater characterised by higher salinity and density providing greater initial buoyancy, but biofouling accelerates water absorption, leading to earlier submersion. Transitions from floating to semi-submerged and then fully submerged can also be considered, mimicking natural wood decomposition in water bodies. The spherical or rounded geometry of the structure may be advantageous for aquatic deployment because it allows hydrodynamic stability, multi-directional colonization surfaces and simplified large-scale distribution, including aerial or remote deployment. The biodegradable nature of the mycelium composite enables the structure to gradually integrate into surrounding ecosystems, providing temporary ecological support while avoiding long-term accumulation of artificial materials. Biochar in marine and aquaculture systems can provide microbial biofilm substrate, nutrient adsorption, pH buffering and surface roughness for colonization. Even if not used for nutrient release, it improves ecological colonization surfaces. A spherical shape can be useful in water systems as being hydrodynamically stable, slightly rollable on seabed, with multiple orientation surfaces, easy aerial or drone deployment and good for mass distribution in restoration projects.

Optionally, the mycelium-based structure comprises structural features for securing stability in water. These can include weighted bases (using sand, gravel or clay) to prevent tipping in moving water; rounded or tapered edges reduce water resistance and prevent overturning; attachment points for natural ballast (such as stones, sediment pockets) or tethering to underwater structures; and/or a plurality of through-holes in flowing water to reduce drag forces and enhance stability.

Optionally, the mycelium-based structure comprises surface texture features for supporting biofouling. These can include porous, rough surfaces mimicking natural driftwood or rock crevices, encouraging attachment of algae, mussels, barnacles and microbial communities; micro-cavities and/or grooves providing safe niches for early-stage colonization of biofilm and filter-feeding organisms; irregular textures encouraging settlement of marine invertebrates (e. g. sponges, corals and molluscs) while reducing wash-off from currents; and/or synthetic or semi-natural surface analogues inspired by coral reef textures, mangrove root structures and sunken logs.

In certain embodiments, the structure may be used to support the distribution and settlement of algal spores or propagules (kelp or other macroalgae) in marine or coastal environments. For example, the structures may be pre-treated, sprayed, inoculated, or otherwise contacted with algal spores or propagules prior to deployment. The spores may adhere to the porous and fibrous surface of the mycelium-based structure, supported by porous carrier materials such as biochar. The structure may then be distributed across a water surface (e.g., by aerial deployment, vessel deployment, or manual placement). Due to their internal porosity and potential initial buoyancy, the structures may temporarily float or remain near the water surface, providing time for spore attachment or early colonization. As water gradually infiltrates the structure, the buoyancy may decrease, and the structures may progressively submerge or settle onto the seabed or shallow sediment zones. During this process, the attached spores or propagules may be transported to suitable substrates where they may contribute to the establishment or restoration of macroalgal communities, including seaweed or kelp beds. The structure may therefore function as a temporary biodegradable carrier for algal propagules and settlement substrate, facilitating the spatial distribution of early-stage algal colonization in restoration or aquaculture contexts.

Optionally, the mycelium-based structure comprises structural features for resisting wave motion in seawater. These can include weighted base or anchoring features preventing excessive movement in high-energy coastal areas; wave-dispersing curved shapes reducing drag forces and stabilizing structures in dynamic waters; modular interlocking sections allowing flexible positioning in artificial reef setups; and/or flexible attachment points tethered to floating solar platforms, docks or offshore wind turbines without drifting.

Optionally, the mycelium-based structure comprises cold-resistant mycelium species *P*. *ostreatus* and/or *T. versicolor,* which have high freeze tolerance, ensuring stability in cold climates.

Optionally, the mycelium-based structure comprises structural features for moisture absorption control, including denser mycelium growth with a fibrous substrate (e. g. hemp, coconut coir), enhancing water absorption control; water-retentive moss additives maintaining optimal humidity for nesting species; and/or variable pore/through-hole/cavity sizes allowing for air circulation while maintaining humidity. In addition, layered mycelium walls can regulate temperature and moisture, preventing overheating or excessive drying; and ventilation gaps can control internal humidity, optimizing nesting conditions for birds, insects and small mammals.

Optionally, the mycelium-based structure comprises textured surface features in the form of rough, fibre-like outer textures mimicking tree bark or rocky cavities.

Optionally, the herein disclosed aspects of specific fungal species, their combinations and suitability (including the specific combinations of *P. ostreatus* and *P. pulmonarius,* and *G. lucidum* and *P. pulmonarius*), specific substrates, their combinations and suitability (including hemp hurd, hemp fibres), through-holes and/or cavities, various additives or add-ons in the structure (pigment, dye, plant seeds, fungal spores, insect eggs, insect larvae, outer protective coating, nutrient material, hydrocolloid binder, electronics, buoyancy-adjusting features, water-stabilizing and wave-resisting features, surface textures, adhesion mechanisms, aerodynamic load-bearing features, moisture-control features), and one-step as well as two-step colonization methods for production of the above-mentioned mycelium-based structure, seed encapsulation methods, propagation/breeding material encapsulation methods, outer coating application methods and 3D printing methods also relate the rollable-shaped structure described in this aspect.

The structure can be deployed aerially (such as with drones or aircraft), manually or with the assistance of wind and/or gravity (thus making use of natural wind patterns and/or sloped or uneven terrains). The deployment can also be performed by manual or automatised sowing or by means of seeding machines. Upon deployment, the outer shell comprising mycelium begins to degrade, integrating into the soil and releasing nutrients stored within the inner core. The porous carrier stabilizes soil structure, improves water retention and fosters microbial activity, creating favourable conditions for vegetation growth and long-term soil health.

The structure's deployability and its abiotic core even has an extra-terrestrial potential (such as on Mars) for supporting initial soil conditioning efforts for experimental agriculture, ecosystem establishment or regolith stabilization.

In the second aspect of the invention, the object of the present invention is achieved by a method for production of the above-mentioned mycelium-based structure, according to claim 13. The preferred embodiments of the method are disclosed in claims 14 and 15.

### One-step colonization method

The method comprises the following steps:
a. soaking the substrate, optionally together with the porous carrier, in water to 60 to 75 % moisture content;
b. mixing 10 to 80 wt. % of the substrate and 1 to 85 wt. % of the porous carrier (soaked or dry) with 5 to 15 wt. % of fungal spawn of at least one fungus and with up to 5 wt. % of a nutrient material digestible by the at least one fungus;
c. placing the mixture in a moulding form and allowing the mycelium to colonise the substrate from the mycelium precursor by digesting the nutrient material for a total colonisation time of at least 8 days (such as 8 to 12 days);
d. drying the mycelium at 40 to 50 °C for 3 to 5 hours, then at 85 to 95 °C for 2 to 4 hours to obtain the mycelium-based structure.

Optionally, the fungus is any of *Pleurotus ostreatus, Pleurotus pulmonarius, Pleurotus populinus, Pleurotus eryngii, Ganoderma lucidum, Trametes versicolor, Phanerochaete chrysosporium, Lentinula edodes, Hypsizygus ulmarius* or a combination thereof.

In step a., the substrate is soaked in water to achieve an optimal moisture content of 60-75 %, optionally 65-70 %, ensuring proper hydration for fungal colonization. Soaking softens the substrate, such as hemp fibres, making it more accessible to fungal enzymes such as cellulases, hemicellulases and ligninases, which facilitate colonization. This process also eliminates natural antifungal compounds that could inhibit fungal growth.

A standard soaking method comprises a step of submerging the substrate in clean water at room temperature (app. 20°C) for 24-48 hours. Water should be changed after app. 12 hours if it becomes murky to prevent bacterial contamination. For faster substrate readiness, an accelerated soaking method comprises a step of submerging the substrate in clean warm water (app. 50-60°C) for 12-24 hours. This method speeds up substrate softening, making it easier for fungi to penetrate while maintaining substrate integrity.

In general, the moisture level must be controlled, and the substrate should be wet but not dripping. The fibre structure should remain loose enough to allow airflow while ensuring mycelial attachment. Whatever substrate is used, it must retain required lignocellulosic properties to support fungal growth and structural formation.

If the porous carrier is soaked in water with the substrate, pH of 6.5 to 7.5 is preferred.

In step b., once the substrate is hydrated to 60-75 % moisture content, the inoculation mixing step begins. This step ensures rapid and uniform colonization by introducing fungal mycelium in a controlled manner while preventing contamination. The soaked substrate is inoculated with at least one fungal strain, wherein 10 to 80 wt. %, preferably 30 to 80 wt. %, such as 50 wt. %, of the substrate is mixed with 5 to 15 wt. %, such as 10 wt. %, of fungal spawn, with up to 5 wt. %, such as 2.7 wt. % of the nutrient material and with 1 to 85 wt. %, preferably 1 to 50 wt. % of the porous carrier, such as 37.3 wt. % of the porous carrier. The fungal strain can be selected from *Pleurotus ostreatus, Pleurotus pulmonarius, Pleurotus populinus, Pleurotus eryngii, Ganoderma lucidum, Trametes versicolor, Phanerochaete chrysosporium, Lentinula edodes, Hypsizygus ulmarius* or a combination thereof. A high spawn rate of 10-15 wt. % is used to accelerate colonization, ensuring fungi establish dominance before contaminants can take hold. However, even 1 wt. % spawn could be enough to reach the same colonization level, if working in highly sterile and controlled conditions.

For optimal growth, grain and sawdust fungal spawn types can be used. Grain spawn allows for faster colonization due to high nutrient content but requires sterile handling to prevent contamination. Sawdust spawn achieves lower colonization but promotes denser, more resilient mycelial growth and is less prone to contamination than grain spawn.

The nutrient material digestible by at least one fungus is a carbohydrate source, such as flour and in particular wheat flour, rye flour, rice flour, oat flour, soybean flour or corn flour. As an alternative to mixing the nutrient material with the remaining components (see step b. above), the nutrient material can be injected only into the porous carrier after mixing the substrate, porous carrier and fungal spawn. This can serve as a precautionary measure against early contamination of the mycelium.

The porous carrier is selected from biochar, activated carbon, lignite-derived humic acid or a derivative thereof, zeolite, diatomaceous earth, perlite, vermiculite, bentonite, montmorillonite, pumice, basalt or a combination thereof. More generally, the porous carrier is selected from carbonaceous materials, mineral silicates, clay minerals, volcanic minerals or humic substances. The porous carrier is characterized by a pore structure and a high internal surface area suitable for the adsorption of moisture and nutrients.

In step c., once inoculated, the mixture is placed into a breathable moulding form to create an optimal fungal growth environment. This inoculation moulding step is critical for defining the density, strength and durability of the final structure. Temperature is maintained between 20 and 26 °C to support rapid colonization and ensure optimal mycelial activity. Humidity is kept between 90 and 95 % relative humidity to prevent substrate drying. Air exchange is limited to CO₂-rich conditions (2000-5000 ppm) to encourage dense and cohesive mycelial growth. Incubation can be conducted in darkness, as light is not required at this stage. The incubation period lasts at least 8 days, depending on environmental conditions and fungal activity.

The moulding form has a negative shape of the final structure and can be 3D-printed or even a DIY cardboard-based. In general, the moulding form must be made of a material that is not degraded by mycelium. The moulding form can comprise tubular or various 3D elements (cavity-like elements), cross-sectional and/or penetrating the moulding from only from one side, creating a negative shape around which the mycelium can grow, and thus form through-holes and/or cavities in the final structure.

The mixture is compacted into pre-designed moulding forms, ensuring the intended shape is maintained. Moderate compression (to 60-70 % volume of the moulding form) is applied to enhance mycelial bonding without restricting airflow.

For structures requiring additional reinforcement, long hemp fibres can be placed within the moulding form before or during substrate packing. These hemp fibres act as an internal support network, improving tensile strength and structural resilience. The natural integration of fibres into the mycelial matrix ensures a uniform, reinforced form without disrupting the biodegradability of the material. The moulding forms allow for limited gas exchange, ensuring continued fungal growth while preventing excessive moisture loss. By incorporating hemp fibres, the material gains increased load-bearing capacity, making it more resistant to stress while maintaining its lightweight and biodegradable nature.

As colonization completes, the mycelial network solidifies, ensuring that the form maintains its shape before drying. This stage is critical for achieving uniform fungal distribution, minimizing weak points in the material; strong internal binding that remains stable after dehydration; and a balance between biodegradability and durability for practical applications. This phase finalizes the biological formation of the material, preparing it for the drying and structural hardening process.

In step d., once the colonization phase is complete, the moulded structure undergoes a controlled drying process to remove excess moisture while preserving its integrity. This step ensures the material is stable, structurally sound, and no longer biologically active. At this point, the fungus is no longer alive; its hyphae have become a rigid scaffold of chitin, glucans and proteins binding all components together. Optionally, the loaded nutrients are now immobilized within the structure; some inside the fungal biomass (causing slow release of nutrients) and the rest deposited in the pores of the porous carrier and on the substrate (causing medium to fast release of nutrients).

The drying process can be carried out using various methods, including a drying chamber, industrial convection ovens, vacuum dryers, infrared drying, freeze-drying or even a solar oven for a low-energy, eco-conscious approach. Drying conditions should ensure gradual moisture removal to maintain structural integrity and prevent warping. In small-scale applications, a standard home oven can also be used, provided the temperature and drying duration follow the required parameters.

To prevent material shrinkage or cracking, moisture is removed gradually. The drying process begins with a low-temperature drying phase to allow slow and even evaporation. The colonized structure is placed in an oven or a drying chamber at 40 to 50 °C for 3 to 5 hours, such as at 45 °C for approximately 4 hours. The oven door can be left slightly open during this phase to allow moisture to escape, which ensures that most of the free water is removed while avoiding thermal shock to the structure. The gradual moisture reduction helps retain the fibrous integrity of the structure, preventing deformation or excessive brittleness. Drying first below 40 °C slows down the process and increases contamination risk due to prolonged moisture exposure. Despite of reducing thermal stress, potentially improving structural flexibility, they are not recommended for efficient production. Drying first above 50 °C accelerates moisture removal, but can lead to surface hardening, shrinkage or internal cracking. Some brittleness may occur, affecting durability. Drying first for less than 3 hours risks incomplete drying, microbial growth and structural deformation. Shorter drying may work if combined with controlled humidity and ventilation, but it is not ideal for long-term stability. Drying first for more than 5 hours ensures better structural stability but may cause excessive hardening and impact biodegradability and uses too much energy.

After the initial drying step, the form undergoes higher-temperature baking to further reduce internal moisture and solidify the structure. The temperature is increased to 85 to 95 °C, such as 90 °C, with the oven door closed for 2 to 4 hours, such as for 3 hours. This phase completes the dehydration process, removing any residual water while reinforcing the material's rigidity. The drying temperature is carefully controlled to prevent charring or over-drying, which could compromise the form's structural properties. Drying then below 85 °C risks incomplete mycelium deactivation, leading to unwanted regrowth, warping or mould susceptibility. While it may preserve flexibility, longer drying times would be required to achieve full moisture removal. Drying then above 95 °C, although ensuring full mycelium deactivation, preventing contamination or regrowth, excessive heat may cause brittleness, excessive shrinkage and reduced mechanical resilience. Drying then for less than 2 hours risks insufficient drying, residual moisture retention, leading to warping, microbial growth, and structural instability. A shorter drying time might work in controlled environments (e. g. vacuum drying), but not under standard conditions. Drying then for more than 4 hours ensures moisture removal and long-term stability, but may lead to brittleness, unnecessary energy use, and degradation of mycelium's natural shock-absorbing properties. Active mycelium in the final structure can lead to structural warping, unwanted colonization and mould contamination in humid environments. To prevent this, proper drying (85-95 °C for 2-4 h) ensures full mycelium deactivation while preserving structural integrity.

The drying step is designed to eliminate all biologically active mycelium. At temperatures above 80 °C, the fungal network ceases metabolic activity, ensuring the material remains inert. This prevents unintended fungal growth after deployment while maintaining the structure's biodegradability. The absence of living mycelium ensures stability in storage and transportation. Once the drying process is complete, the final form exhibits: structural stability, maintaining its intended shape without deformation; lightweight yet durable composition, suitable for handling and application; and resistance to premature degradation, allowing controlled biodegradability when exposed to natural conditions. This final stage completes the transformation of the colonized substrate into a functional, fully formed material, ready for deployment in its intended application.

After completing the drying and structural hardening process, the material reaches its final state. This phase ensures the product meets the required standards for structural integrity, biodegradability, and functional performance while remaining completely inert. The final material retains a rigid yet lightweight structure, offering durability while ensuring it remains biodegradable over time. The fibrous mycelial network formed during colonization provides high structural cohesion, preventing fragmentation. The drying process fully deactivates the fungi, ensuring that no further biological growth occurs. The structure maintains its intended shape even after exposure to external environmental conditions such as humidity and temperature fluctuations.

While designed to be biodegradable, the product maintains moderate moisture and thermal resistance to ensure functionality in various conditions. Surface rigidity prevents immediate water absorption, allowing for a controlled breakdown process rather than rapid disintegration. Thermal processing during drying reinforces the material's form, preventing collapse under mild environmental stress.

The final form is adaptable to various use cases due to its combination of lightweight properties, biodegradability, and natural strength. The material can be tailored in density and thickness based on specific application requirements. The composition can be adjusted to incorporate various lignocellulosic materials while maintaining similar performance characteristics. The design is scalable for small-batch production or large-scale manufacturing, making it suitable for widespread deployment.

Since the structure is fully dried and inert, it can be stored for extended periods without risk of biological reactivation. Storage in dry, ventilated conditions prevents any moisture absorption that could affect structural integrity. The material remains stable in standard temperature ranges, ensuring ease of transportation and deployment. The combination of durability, biodegradability, and adaptability makes this material an effective solution for sustainable, nature-integrated applications while maintaining scalability for diverse industrial and ecological uses.

### One-step colonization method with a delayed introduction of the porous carrier

The method comprises the following steps:
a. soaking the substrate in water to 60 to 75 % moisture content;
b. mixing 85 to 98 wt. % of substrate with 1 to 15 wt. % of fungal spawn of at least one fungus and with 1 to 3 wt. % of a nutrient material digestible by the at least one fungus;
c. placing the mixture in a moulding form and allowing the mycelium to colonise the substrate from the mycelium precursor by digesting the nutrient material for a total colonisation time of at least 8 days (such as 8 to 12 days);
d. introducing the porous carrier (such as biochar) into an opening, cavity or insertion port formed in the mycelium in a weight ratio of 4:1 (porous carrier : mycelium)
e. drying the mycelium at 40 to 50 °C for 3 to 5 hours, then at 85 to 95 °C for 2 to 4 hours to obtain the mycelium-based structure.

The opening, cavity or insertion port can be formed in the moulding form in step c. such that the mycelium can colonise around it. Alternatively or additionally, the opening, cavity or insertion port can be formed in the colonised mycelium after step c. The porous carrier can be introduced as soaked in water to achieve an optimal moisture content of 60-75 %, optionally 65-70 %, or as dry.

In step b., once the substrate is hydrated to 60-75 % moisture content, the inoculation mixing step begins. This step ensures rapid and uniform colonization by introducing fungal mycelium in a controlled manner while preventing contamination. The soaked substrate is inoculated with at least one fungal strain, wherein 85-98 wt. %, such as 87.3 wt. %, of the substrate is mixed with 1-15 wt. %, such as 10 wt. %, of fungal spawn and with 1-3 wt. %, such as 2.7 wt. % of the nutrient material.

For details about the combinations of the substrate, fungal spawn, nutrient materials and porous carriers, the soaking, inoculation, moulding and drying procedures, see the one-step colonization method with the porous carrier added with the substrate.

The moulding form can comprise tubular or various 3D elements (cavity-like elements), cross-sectional and/or penetrating the moulding from only from one side, creating a negative shape around which the mycelium can grow, and thus form openings, cavities or insertion ports in the final structure.

### Two-step colonization method with one species

Optionally, a two-step colonization is performed in steps b. and c. (of either of the one-step colonization methods described above). A two-step colonization is more time- and cost-consuming than the one-step colonization described above, and at the same time, less risky in terms of mould or bacterial contamination. A two-step sequential colonization method can still be applied for a single species to reduce contamination risk and ensure a robust mycelial network before moulding.

Firstly, in step b., the substrate and the porous carrier is mixed with the fungal spawn as a mycelium precursor and optionally with the nutrient material in a container to form a mixture, allowing the mycelium to colonise the substrate from the mycelium precursor at least for 5 days (such as for 5-7 days). This step ensures strong mycelial development before the step described below, reduces contamination risk and strengthens early mycelium networks. If the nutrient material is added in step b., further nutrient material might or might not be added in step c. to the mixture to a total content of 3 wt. %.

Then, in step c., the mixture is transferred from the container in a moulding form, optionally mixed with the nutrient material and the mycelium is allowed to further colonise at least for 3 more days (such as for 3-5 days). If the nutrient material is not added in step b., it is added in step c.

The soaked substrate is inoculated with one fungal strain, comprising 10-80 wt. %, preferably 30-80 wt. %, such as 60 wt. %, of the substrate, 5-15 wt. %, such as 15 wt. %, of the fungal spawn, up to 5 wt. %, such as 2 wt. %, of the nutrient material, and 1-85 wt. %, preferably 1-50 wt. %, such as 33 wt. %, of the porous carrier.

Once inoculated, the mixture is placed into a breathable bag, bucket or incubation container to create an optimal fungal growth environment. The incubation conditions can be the same as introduced above in step c. (20-26 °C, 90-95 % relative humidity, 2000-5000 ppm CO₂, darkness or light). The incubation period lasts at least 5 days (such as 5-7 days), depending on environmental conditions and fungal activity. Empirically, the incubation period can last as long as the mixture has a whitish surface. As soon as the mixture turns into a brownish texture and/or a yellowish enzymatic fluid appears, it indicates that the mycelium gets mature and that the initial colonization phase should be terminated.

After the initial colonization phase, once the mixture has undergone at least 5 days of colonization, it is placed into a moulding form, where it undergoes further colonization and shaping to allow full integration of the fungal strain. This phase is critical for defining the final form's density, strength, and durability. The incubation conditions can be the same as introduced above in step c. (20-26 °C, 90-95 % relative humidity, 2000-5000 ppm CO₂, darkness or light). The incubation period lasts at least 3 days (such as 3-5 days), depending on environmental conditions and fungal activity. After the final drying step (as described above), the structure results in a balanced material that is resistant to premature degradation while remaining fully compostable.

Equally to the one-step colonization, the moulding form has a negative shape of the final structure and can comprise various 3D elements (cavity-like elements), cross-sectional and/or penetrating the moulding from only from one side, creating a negative shape around which the mycelium can grow.

### Two-step colonization method with two species

Optionally, a two-step colonization is performed in steps b. and c. (of either of the one-step colonization methods described above). A two-step colonization is more time- and cost-consuming than the one-step colonization described above, and at the same time, less risky in terms of mould or bacterial contamination.

Firstly, in step b., a first portion of the substrate and the porous carrier is mixed with fungal spawn of *Pleurotus ostreatus* and/or *Ganoderma lucidum* as a first mycelium precursor and optionally with the nutrient material to form a mixture A in a first container, allowing the mycelium to colonise the substrate from the first mycelium precursor at least for 5 days (such as for 5-7 days); and a second portion of the substrate and the porous carrier is mixed with fungal spawn of *Pleurotus pulmonarius* as a mycelium precursor and optionally with the nutrient material to form a mixture B in a second container, allowing the mycelium to colonise the substrate from the second mycelium precursor at least for 5 days (such as for 5-7 days). This step ensures strong mycelial development before the step described below, reduces contamination risk and strengthens early mycelium networks. If the nutrient material is added in step b., further nutrient material might or might not be added in step c. to each mixture to a total content of 3 wt. %.

Then, in step c., the mixtures A and B are mixed together in a weight ratio of 2:3 to 3:2, and further optionally with the nutrient material, placed in a moulding form and the mycelium is allowed to further colonise both portions of the substrate from the first and second mycelium precursors for at least for 3 more days (such as for 3-5 days). If the nutrient material is not added in step b., it is added in step c.

In other words, two distinct fungal strains can be introduced separately before being combined. A fast-colonizing, cellulose-degrading strain of *Pleurotus pulmonarius* spreads rapidly within the first 5-7 days, acting as a pioneer species, outcompeting contaminants while efficiently degrading cellulose and hemicellulose and softening the substrate. A slow-colonizing, lignin-degrading strain of *Pleurotus ostreatus* and/or *Ganoderma lucidum* develops a denser mycelial network, binding the substrate more effectively, specializing in lignin degradation, reinforcing structural integrity and improving durability.

The soaked substrate is divided into two separate batches, each inoculated with one fungal strain. Mixture A comprises 10-80 wt. %, preferably 30-80 wt. %, such as 40 wt. %, of the substrate, 5-15 wt. %, such as 15 wt. %, of the slow-growing fungal spawn (*Pleurotus ostreatus* and/or *Ganoderma lucidum*), 1-85 wt. %, preferably 1-50 wt. %, such as 45 wt. %, of the porous carrier and optionally up to 5 wt. % of the nutrient material. Mixture B comprises 10-80 wt. %, preferably 30-80 wt. %, such as 40 wt. %, of the substrate, 5-15 wt. %, such as 15 wt. %, of the fast-growing fungal spawn (*Pleurotus pulmonarius*), 1-85 wt. %, preferably 1-50 wt. %, such as 45 wt. % of the porous carrier and optionally up to 5 wt. % of the nutrient material.

Once inoculated, the mixtures A and B are separately placed into breathable bags, buckets or incubation containers to create an optimal fungal growth environment. Optionally, 1-3 wt. % of the nutrient material is added to a total content of 3 wt. %. The incubation conditions can be the same as introduced above in step c. (20-26 °C, 90-95 % relative humidity, 2000-5000 ppm CO₂, darkness or light). The incubation period lasts at least 5 days (such as 5-7 days), depending on environmental conditions and fungal activity.

The fast-growing fungal strain spreads aggressively during the initial colonization phase, rapidly establishing dominance over its respective substrate batch. In parallel, the slow-growing, lignin-degrading strain develops a denser mycelial structure within its separate batch, reinforcing substrate integrity. Once the separately colonized substrates are combined during a secondary colonization phase, the fast-colonizing strain has already synergistically softened the material, making it easier for the slower strain to penetrate and further strengthen the structure.

Initial separate colonization ensures each fungal strain can establish without competition, optimizing their respective growth phases. Fast-colonizing fungi create a protective layer, reducing contamination risk before the slower strain reinforces the material. Balanced structural formation is achieved through sequential fungal activity rather than immediate competition. The methodology remains adaptable, supporting similar fungal pairings with complementary colonization dynamics. Scalable for both small-batch and industrial applications, ensuring consistency in production. This structured inoculation and colonization process ensures optimal fungal integration, setting the stage for a secondary colonization and moulding.

After the initial colonization phase, the two separately inoculated substrates are combined to achieve a balanced fungal network. This step ensures that the final material integrates the fast-colonizing and strong-binding fungal strains, enhancing both production efficiency and structural integrity. Once each substrate mixture (A and B) has undergone at least 5 days of independent colonization, they are mixed in a weight ratio of 2:3 to 3:2, such as in a weight ratio of 1:1, to maximize biological synergy and structural uniformity. The fast-growing fungal strain has already spread extensively, establishing a protective mycelial layer that reduces contamination risk. The slow-growing strain, once integrated, strengthens the substrate by developing a denser binding network, improving material integrity and durability. By combining the pre-colonized substrates at this stage, mycelial interaction occurs in a controlled and optimized environment, ensuring a uniform fungal distribution without direct early competition. This sequential approach results in a well-integrated, stable, and cohesive final structure, preparing the material for moulding and secondary colonization within its final shape.

After blending the two colonized substrate mixtures A and B, the mixture is placed into a moulding form, where it undergoes further colonization and shaping to allow full integration of both fungal strains. This phase is critical for defining the final form's density, strength, and durability. The incubation conditions can be the same as introduced above in step c. (20-26 °C, 90-95 % relative humidity, 2000-5000 ppm CO₂, darkness or light). The incubation period lasts at least 3 days (such as 3-5 days), depending on environmental conditions and fungal activity. During this stage, the slow-growing fungal strain further strengthens the structure, reinforcing the bonds formed by the fast-growing strain. After the final drying step (as described above), the incorporation of both fast-growing and strong-binding fungal strains results in a balanced material that is resistant to premature degradation while remaining fully compostable.

Equally to the one-step colonization, the moulding form has a negative shape of the final structure and can comprise various 3D elements (cavity-like elements), cross-sectional and/or penetrating the moulding from only from one side, creating a negative shape around which the mycelium can grow.

### Seed incorporation method

Concerning the mycelium-based structure comprising plant seeds, there are three possible ways of embedding the plant seeds within the structure: encapsulation, mid-stage colonization and late-stage colonization.

In the encapsulation method, hollow cavities (capsules) are integrated within the structure during the moulding phase. The seeds are poured into these cavities and sealed with a plug made of the same biodegradable mycelium-substrate composite. The capsules remain protected from external elements (e. g. humidity, heat fluctuations, predation). Once the structure degrades (or is intentionally crushed by an operator), the seeds are released into the soil for natural germination.

In the mid-stage colonization method, the seeds are embedded into pre-colonized substrate fragments that are broken up and mixed into the primary mycelium-substrate mixture before the final moulding stage. During the second colonization phase, the seeds become integrated directly into the body of the structure. The seeds are shielded within the structure, benefiting from protection against external elements while maintaining the potential for germination. As the structure degrades, seeds are released gradually into the surrounding environment. While germination rates may vary due to exposure during the colonization process, this method increases the potential number of viable seeds dispersed naturally.

In the late-stage colonization method, instead of confining all seeds in capsules, this method involves distributing the seeds at the final stage of mycelium colonization. This allows the seeds to be covered by mycelium near the surface, but not consumed completely, ensuring viability through the drying process. The seeds remain evenly distributed on the surface, making dispersal possible upon natural fragmentation or operator intervention.

For applications requiring greater water resistance, natural hydrophobic coatings such as beeswax or chitin-based solutions can be applied. Beeswax coating forms a water-repellent layer while allowing slow biodegradation. Chitin-based coating is derived from natural biopolymers, enhances structural strength and moisture resistance while remaining eco-friendly. If enhanced water resistance is needed, these treatments can be applied post-drying through dipping, brushing, or spraying techniques, depending on application requirements. These optional coatings ensure greater resilience in humid environments while preserving the form's biodegradability and ecological function.

Similarly to seeds, also fungal spores, insect eggs or insect larvae can be incorporated by such methods.

### Outer coating application method

Concerning the mycelium-based structure comprising an outer protective coating, there are three possible ways of coating the structure: dip-coating, spray-coating and infusion during mycelium growth.

In the dip-coating method, the finished structure is partially or fully submerged in a heated, liquefied solution of cutin or beeswax (cutin or beeswax illustrated as an example). Once removed, it dries naturally, forming a breathable yet water-resistant layer. This method is suitable for large-scale production (solar parks, urban and water-based applications), ensuring even distribution across the entire surface.

In the spray-coating method, a fine mist of cutin/beeswax solution is sprayed onto the surface of the finished structure. This allows for localized waterproofing, such as bottom sections or outer surfaces. This method is suitable for reducing material usage while keeping specific areas breathable, such as in targeted applications where only one side needs waterproofing. Spray-coating only on exposed areas prevents excessive waterlogging while allowing inner sections to remain breathable.

In the infusion method, cutin is mixed into the substrate, allowing partial absorption into the mycelium structure. This results in internal water repellence while keeping the outer surface untreated for biodegradability. This method is suitable for applications requiring longer durability while still decomposing naturally, such as in underground or high-humidity environments where moisture balance is crucial.

The spray-coating and the infusion methods can be combined for underwater applications, providing different rates of decomposition and ensuring gradual breakdown over time.

### 3D printing method

Optionally, the mixture(s) prepared in step b. of the above-described one-step or two-step methods can be a paste-like substance suitable for a mycelium 3D printing method (see the publication by Yang et al., titled "3D-Printed Mycelium Biocomposites: Method for 3D Printing and Growing Fungi-Based Composites" and available at DOI: 10.1089/3dp.2023.0342). Step c. of the above-described methods can then be replaced by placing the mixture in a 3D printing device, printing the mycelium-based structure and allowing the mycelium to colonise the substrate from the mycelium precursor for a total colonisation time of at least 8 days (such as 8 to 12 days). Steps a. and d. can remain the same as above, or the parameters can be slightly modified (50 to 75 % moisture content in step a., as also recommended by the publication cited herein and airdrying at ambient temperature for at least 24 h in step d.).

### Use of the mycelium-based structure

In the third aspect of the invention, the object of the present invention is achieved by use of the above-mentioned mycelium-based structure in freshwater, seawater, on the ground or underground. For a more detailed description, see examples. Further uses might include construction panels, fireproof structures, acoustic and/or heat insulation structures, furniture components, biodegradable planting containers, flower pots, surfboards or marine buoys.

In certain embodiments, the mycelium-based structure may also be used in proximity to construction elements, such as brick structures, concrete surfaces, poles, pillars, fences or other vertical or horizontal supports. Mycelium composites are known to possess good compressive strength and load distribution capacity due to the fibrous network formed by fungal hyphae binding the substrate particles. As a result, the structure may be capable of distributing localized mechanical pressure over a wider surface area, which may be advantageous when the structure is placed against or around rigid support elements.

The mycelium-based structure can have several aquatic uses, such as: biofilm support matrices in aquaculture systems, where the porous carrier promotes microbial colonization beneficial for nutrient cycling; temporary nutrient adsorption structures capable of capturing dissolved nutrients (ammonium, phosphate) in aquaculture ponds or nutrient-rich waters; microbial habitat carriers that support beneficial microbial communities in aquatic restoration; substrate elements in kelp or seaweed cultivation systems, where the porous carrier may facilitate microbial and algal colonization on aquaculture lines or ropes; and habitat enhancement structures in marine or freshwater restoration, where the porous surfaces provide settlement sites for microorganisms, algae and small invertebrates. In such embodiments, the porous carrier may act both as a microbial substrate and a temporary nutrient reservoir, while the surrounding mycelium composite provides structural integrity and gradual biodegradation.

If less than 5 wt. % of the porous carrier (i. e. even less than 1 wt. %) is present in the mycelium-based structure, such a structure can serves as a biodegradable settlement substrate for algae, barnacles, mussels, oysters or other aquatic organisms; a temporary artificial habitat structure providing micro-refugia for small invertebrates or juvenile fish; a support structure for aquatic vegetation establishment, including use near reed beds, wetlands, or seagrass restoration zones; a floating or semi-floating ecological element, which may initially exhibit buoyancy due to internal porosity and trapped air, but gradually absorb water and settle into sediments over time; and a sediment-stabilizing structure that may promote colonization by microorganisms and vegetation in coastal, wetland, or shallow-water restoration projects.

### Description of the drawings

Figures 1a to 1f show the mycelium-based structure with a rollable, spherical shape in a cross-sectional view.
Figure 2 shows exemplary cylindrical (top) and spherical (bottom) structures with illustrative dimensions.

### Examples

### Example 1

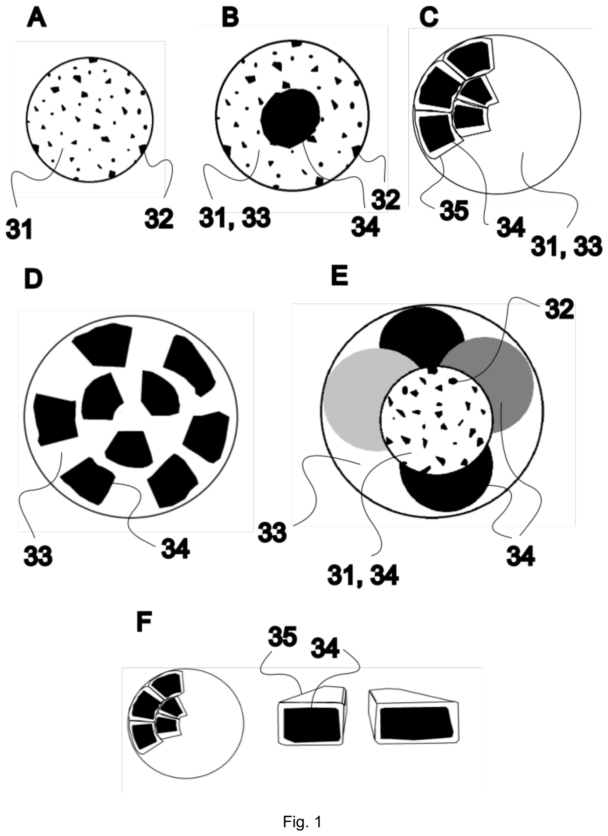

Fig. 1a shows a spherical structure comprising a matrix 31 comprising mycelium, the substrate and scattered bits 32 of the porous carrier (such as biochar or activated carbon) impregnated with at least one nutrient. The scattered bits 32 come into contact with the outer surface of the structure. The scattered bits 32 can be in the form of a fine dust or small fragments. In the context of this example and all sub-examples below, the porous carrier can be on its own, without being impregnated with any nutrient. This spherical structure can be a pellet (e. g. 1-3 cm in diameter) made by a pelletising device.

Fig. 1b shows the structure of Fig. 1a, further comprising an inner core 34 comprising the porous carrier (such as biochar or lignite-derived humic acid) impregnated with at least one nutrient. The matrix 31 forms the outer shell 33. The inner core 34 might be free of mycelium or it might comprise a mycelium-cross-linked structure. The inner core 34 does not come into contact with the outer surface of the structure.

Fig. 1c shows a spherical structure comprising a matrix 31 comprising mycelium and the substrate, forming the outer shell 33, and a plurality of capsules 35 comprising an inner core 34 comprising the porous carrier (such as biochar or zeolite) impregnated with at least one nutrient, further surrounded by mycelium and the substrate. There might or might not be a distinctive boundary between the outer edge of the capsule (i. e. the mycelium and the substrate surrounding the inner core 34) and the matrix 31. The capsules 35 might be free of mycelium or they might comprise a mycelium-cross-linked structure. The capsules 35 do not come into contact with the outer surface of the structure. Fig. 1f shows the capsule 35 of the structure of Fig. 1c in detail, comprising the inner core 34.

Fig. 1d shows a spherical structure comprising an outer shell 33 comprising mycelium and the substrate, and a plurality of inner cores 34 comprising the porous carrier (such as biochar or diatomaceous earth) impregnated with at least one nutrient. The inner cores 34 might be free of mycelium or they might comprise a mycelium-cross-linked structure. The inner cores 34 do not come into contact with the outer surface of the structure.

Fig. 1e shows a spherical structure comprising an outer shell 33 comprising mycelium and the substrate, and a plurality of inner cores 34 comprising the porous carrier (such as biochar or bentonite or montmorillonite) impregnated with at least one nutrient. At least one of the inner cores 34 can comprise a matrix 31 comprising mycelium, the substrate and scattered bits 32 of the porous carrier (such as biochar or bentonite or montmorillonite) impregnated with at least one nutrient. At least one of the inner cores 34 can itself comprise a sub-shell comprising mycelium and the substrate, surrounding the porous carrier (e. g. a ball within a ball, a pomegranate-like structure). At least one of the inner cores 34 can be free of mycelium. The inner cores 34 do not come into contact with the outer surface of the structure.

The methods described below in Examples 3 to 9 and uses described below in Examples 10 to 14 are also applicable for this Example.

### Example 2

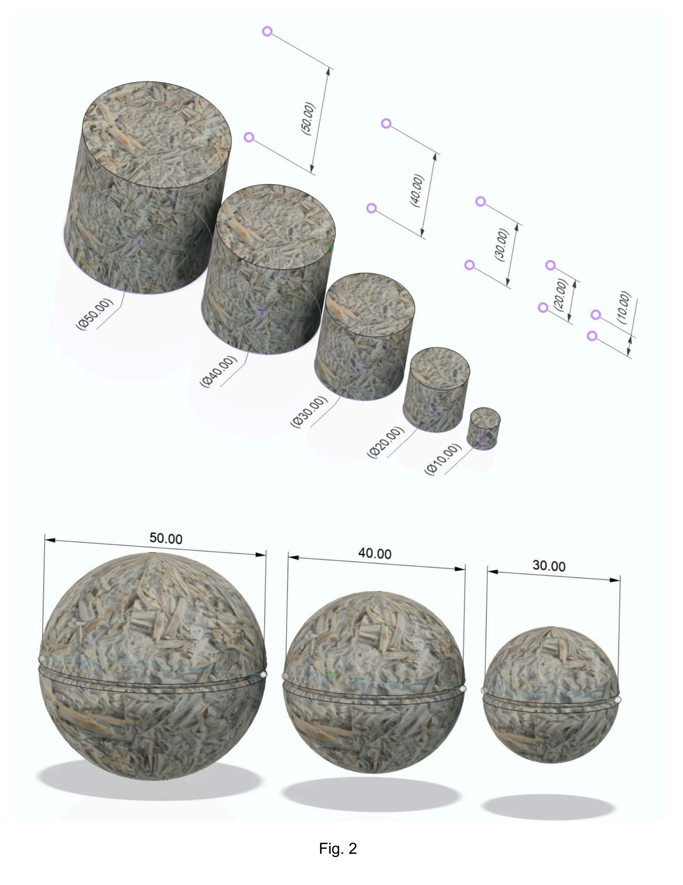

Fig. 2 shows exemplary cylindrical (top) and spherical (bottom) structures with illustrative dimensions, comprising a matrix 31 comprising mycelium, the substrate and scattered bits 32 of the porous carrier (such as biochar or activated carbon) impregnated with at least one nutrient, in line with Example 1.

As can be seen on Fig. 2, the dimensions of the structure can be decreased to lower tens (or even units) of millimetres.

### Example 3

A one-step colonization method can be performed as follows:
1. Hemp hurd (the substrate) is supplied clean and together with biochar as the porous carrier, they are soaked in water until they reach app. 65-70% moisture content.
2. In a moulding form, the hemp hurd and the biochar are mixed with fungi spawn of *P*. *ostreatus* and wheat flour as the nutrient material. The mixture comprises 70 wt. % of the hemp hurd, 10 wt. % of the fungal spawn, 2.5 wt. % of the wheat flour and 17.5 wt. % of the biochar.
3. Once colonization is complete after 8-14 days (such as 12-14 days), the moulding form is removed, and the structure is dried in an oven. First for 4 hours at 45 °C with the oven door slightly open to reduce moisture, followed by 3 hours of baking at 90 °C with the door closed.
4. The final structure is fully dried, ensuring no living mycelium remains.

As an alternative example, *P*. *ostreatus* can be substituted with any of *P*. *pulmonarius, P. populinus, P. eryngii, G. lucidum, T. versicolor, P. chrysosporium, L. edodes* or *H. ulmarius.*

As an alternative example, hemp hurd can be substituted with any of hemp, straw, hay, wood sawdust, wood chips, bagasse, corn husks, corn cobs, coconut coir and/or spent coffee grounds.

As an alternative example, wheat flour can be substituted with any of rye flour, rice flour, oat flour, soybean flour or corn flour.

As an alternative example, biochar can be substituted with any of activated carbon, lignite-derived humic acid or a derivative thereof, zeolite, diatomaceous earth, perlite, vermiculite, bentonite, montmorillonite, pumice or basalt.

As an alternative example, the biochar can be mixed with the hemp hurd without prior soaking of the biochar in water.

Depending on a particular mixture, the moisture content of the substrate can be 60-75 %, the mixture can comprise 30-80 wt. % of the substrate, 5-20 wt. % of the fungal spawn, up to 5 wt. % of the nutrient material and 1-50 wt. % of the porous carrier, the colonization can take 10-21 days (also depending on the initial content of fungal spawn, wherein the less fungal spawn, the longer the colonization period) and the drying can be at 40-50 °C for 3-5 hours, then at 85-95 °C for 2-4 hours.

Other possible combinations include:
a. *P. ostreatus* and hemp, *P. ostreatus* and straw, *P*. *ostreatus* and hay, *P. ostreatus* and wood sawdust, *P. ostreatus* and wood chips, *P*. *ostreatus* and bagasse, *P*. *ostreatus* and corn husks, *P. ostreatus* and corn cobs, *P. ostreatus* and coconut coir, *P. ostreatus* and spent coffee grounds;
b. *P. pulmonarius* and hemp, *P. pulmonarius* and hemp hurd, *P. pulmonarius* and straw, *P*. *pulmonarius* and hay, *P. pulmonarius* and wood sawdust, *P. pulmonarius* and wood chips, *P. pulmonarius* and bagasse, *P. pulmonarius* and corn husks, *P. pulmonarius* and corn cobs, *P. pulmonarius* and coconut coir, *P. pulmonarius* and spent coffee grounds;
c. *P. populinus* and hemp, *P. populinus* and hemp hurd, *P. populinus* and straw, *P. populinus* and hay, *P. populinus* and wood sawdust, *P. populinus* and wood chips, *P. populinus* and bagasse, *P. populinus* and corn husks, *P. populinus* and corn cobs, *P. populinus* and coconut coir, *P. populinus* and spent coffee grounds;
d. *P. eryngii* and hemp, *P. eryngii* and hemp hurd, *P. eryngii* and straw, *P*. *eryngii* and hay, *P. eryngii* and wood sawdust, *P. eryngii* and wood chips, *P*. *eryngii* and bagasse, *P*. *eryngii* and corn husks, *P. eryngii* and corn cobs, *P*. *eryngii* and coconut coir, *P*. *eryngii* and spent coffee grounds;
e. *G*. *lucidum* and hemp, *G. lucidum* and hemp hurd, *G. lucidum* and straw, *G. lucidum* and hay, *G*. *lucidum* and wood sawdust, *G. lucidum* and wood chips, *G. lucidum* and bagasse, *G. lucidum* and corn husks, *G. lucidum* and corn cobs, *G. lucidum* and coconut coir, *G*. *lucidum* and spent coffee grounds;
f. *T. versicolor* and hemp, *T. versicolor* and hemp hurd, *T. versicolor* and straw, *T. versicolor* and hay, *T. versicolor* and wood sawdust, *T. versicolor* and wood chips, *T. versicolor* and bagasse, *T. versicolor* and corn husks, *T. versicolor* and corn cobs, *T. versicolor* and coconut coir, *T. versicolor* and spent coffee grounds;
g. *P. chrysosporium* and hemp, *P*. *chrysosporium* and hemp hurd, *P. chrysosporium* and straw, *P. chrysosporium* and hay, *P. chrysosporium* and wood sawdust, *P*. *chrysosporium* and wood chips, *P. chrysosporium* and bagasse, *P. chrysosporium* and corn husks, *P*. *chrysosporium* and corn cobs, *P. chrysosporium* and coconut coir, *P. chrysosporium* and spent coffee grounds;
h. *L. edodes* and hemp, *L. edodes* and hemp hurd, *L. edodes* and straw, *L. edodes* and hay, *L. edodes* and wood sawdust, *L. edodes* and wood chips, *L. edodes* and bagasse, *L*. *edodes* and corn husks, *L. edodes* and corn cobs, *H. ulmarius* and coconut coir, *L. edodes* and spent coffee grounds; and
i. *H. ulmarius* and hemp, *H. ulmarius* and hemp hurd, *H. ulmarius* and straw, *H. ulmarius* and hay, *H. ulmarius* and wood sawdust, *H. ulmarius* and wood chips, *H. ulmarius* and bagasse, *H. ulmarius* and corn husks, *H. ulmarius* and corn cobs, *H. ulmarius* and coconut coir, *H. ulmarius* and spent coffee grounds.

Any of the combinations above can further include a porous carrier along with the substrate:
a. *P. ostreatus* and biochar, *P. ostreatus* and activated carbon, *P*. *ostreatus* and lignite-derived humic acid or a derivative thereof, *P*. *ostreatus* and zeolite, *P. ostreatus* and diatomaceous earth, *P*. *ostreatus* and perlite, *P*. *ostreatus* and vermiculite, *P*. *ostreatus* and bentonite, *P. ostreatus* and montmorillonite, *P*. *ostreatus* and pumice, *P. ostreatus* and basalt;
b. *P. pulmonarius* and biochar, *P. pulmonarius* and activated carbon, *P. pulmonarius* and lignite-derived humic acid or a derivative thereof, *P. pulmonarius* and zeolite, *P*. *pulmonarius* and diatomaceous earth, *P. pulmonarius* and perlite, *P. pulmonarius* and vermiculite, *P. pulmonarius* and bentonite, *P. pulmonarius* and montmorillonite, *P*. *pulmonarius* and pumice, *P. pulmonarius* and basalt;
c. *P. populinus* and biochar, *P. populinus* and activated carbon, *P. populinus* and lignite-derived humic acid or a derivative thereof, *P. populinus* and zeolite, *P. populinus* and diatomaceous earth, *P. populinus* and perlite, *P. populinus* and vermiculite, *P. populinus* and bentonite, *P. populinus* and montmorillonite, *P. populinus* and pumice, *P. populinus* and basalt;
d. *P. eryngii* and biochar, *P. eryngii* and activated carbon, *P. eryngii* and lignite-derived humic acid or a derivative thereof, *P*. *eryngii* and zeolite, *P. eryngii* and diatomaceous earth, *P*. *eryngii* and perlite, *P. eryngii* and vermiculite, *P*. *eryngii* and bentonite, *P*. *eryngii* and montmorillonite, *P. eryngii* and pumice, *P*. *eryngii* and basalt;
e. *G*. *lucidum* and biochar, *G. lucidum* and activated carbon, *G. lucidum* and lignite-derived humic acid or a derivative thereof, *G. lucidum* and zeolite, *G. lucidum* and diatomaceous earth, *G. lucidum* and perlite, *G. lucidum* and vermiculite, *G. lucidum* and bentonite, *G*. *lucidum* and montmorillonite, *G. lucidum* and pumice, *G. lucidum* and basalt;
f. *T. versicolor* and biochar, *T. versicolor* and activated carbon, *T. versicolor* and lignite-derived humic acid or a derivative thereof, *T. versicolor* and zeolite, *T. versicolor* and diatomaceous earth, *T. versicolor* and perlite, *T. versicolor* and vermiculite, *T. versicolor* and bentonite, *T. versicolor* and montmorillonite, *T. versicolor* and pumice, *T. versicolor* and basalt;
g. *P. chrysosporium* and biochar, *P*. *chrysosporium* and activated carbon, *P*. *chrysosporium* and lignite-derived humic acid or a derivative thereof, *P*. *chrysosporium* and zeolite, *P*. *chrysosporium* and diatomaceous earth, *P*. *chrysosporium* and perlite, *P*. *chrysosporium* and vermiculite, *P. chrysosporium* and bentonite, *P. chrysosporium* and montmorillonite, *P. chrysosporium* and pumice, *P. chrysosporium* and basalt;
h. *L. edodes* and biochar, *L. edodes* and activated carbon, *L. edodes* and lignite-derived humic acid or a derivative thereof, *L. edodes* and zeolite, *L. edodes* and diatomaceous earth, *L. edodes* and perlite, *L. edodes* and vermiculite, *L. edodes* and bentonite, *L*. *edodes* and montmorillonite, *L. edodes* and pumice, *L. edodes* and basalt; and
i. *H. ulmarius* and biochar, *H. ulmarius* and activated carbon, *H. ulmarius* and lignite-derived humic acid or a derivative thereof, *H. ulmarius* and zeolite, *H. ulmarius* and diatomaceous earth, *H. ulmarius* and perlite, *H. ulmarius* and vermiculite, *H. ulmarius* and bentonite, *H*. *ulmarius* and montmorillonite, *H. ulmarius* and pumice, *H. ulmarius* and basalt.

An exemplary biochar used in this Example is a crystalline biochar having particle size approx. 1-20 mm before milling, bulk density (<3 mm) approx. 276 kg/m³, specific surface area (as explained by Brunauer-Emmett-Teller (BET) theory) approx. 558 m²/g, water holding capacity (WHC) approx. 162.5 %, ash content (measured at 550 °C) of 4.1 %, pH (measured in CaCl₂) of 8.76 and elemental composition of 91.3 wt. % organic carbon, 0.66 wt. % nitrogen and 0.03 wt. % sulphur. After 30 min of soaking dry biochar in water (1:2 parts ratio), pH is 8.3 and electrical conductivity (EC) 436 ppm. After 8 h of soaking dry biochar in water (1:2 parts ratio), pH is 8.5 and electrical conductivity (EC) 310 ppm. Control by tap water prior to soaking gives pH of 7.1 and EC of 241 ppm.

The final mycelium-based structure comprises: 10 wt. % of the mycelium, 70 wt. % of the substrate and 20 wt. % of the porous carrier.

### Example 4

A one-step colonization method can be performed as follows:
1. Hemp hurd (the substrate) is supplied clean and soaked in water until it reaches app. 65-70% moisture content.
2. In a moulding form, the hemp hurd is mixed with fungi spawn of *P*. *ostreatus* and wheat flour as the nutrient material. The mixture comprises 87.5 wt. % of the hemp hurd, 10 wt. % of the fungal spawn and 2.5 wt. % of the wheat flour. Optionally, there is at least one opening, cavity or insertion port formed in the moulding form such that the mycelium can colonise around it.
3. Once colonization is complete after 8-14 days (such as 12-14 days) and the moulding form is removed. If not made in step 2, at least one opening, cavity or insertion port is formed in the colonised mycelium. The porous carrier (such as biochar) is inserted in the opening, cavity or insertion port in a weight ratio of 4:1 (porous carrier : mycelium). The colonization can optionally continue for up to 48 hours to seal and overgrow the opening, cavity or insertion port.
4. The structure is then dried in an oven. First for 4 hours at 45 °C with the oven door slightly open to reduce moisture, followed by 3 hours of baking at 90 °C with the door closed.
5. The final structure is fully dried, ensuring no living mycelium remains.

Depending on a particular mixture, the moisture content of the substrate can be 60-75 %, the mixture can comprise 85-98 wt. % of the substrate, 1-15 wt. % of the fungal spawn and 1-3 wt. % of the nutrient material, the colonization can take 10-21 days (also depending on the initial content of fungal spawn, wherein the less fungal spawn, the longer the colonization period) and the drying can be at 40-50 °C for 3-5 hours, then at 85-95 °C for 2-4 hours.

The final mycelium-based structure comprises: 8 wt. % of the mycelium, 12 wt. % of the substrate and 80 wt. % of the porous carrier.

Further possible combinations of the substrate, the fungal species, the nutrient materials and the porous carriers are listed in Example 3 above.

### Example 5

A two-step colonization method can be performed as follows:
1. Hemp hurd (the substrate) is supplied clean and together with biochar as the porous carrier, they are soaked in water until they reach app. 65-70% moisture content.
2. In an inoculation bag, bucket or container (preferably sterile), the hemp hurd and the biochar are mixed with fungal spawn of *P*. *ostreatus.* The mixture comprises 60 wt. % of the hemp hurd, 10 wt. % of the fungal spawn and 30 wt. % of the biochar.
3. After 6-8 days of colonization (meaning at least 5 days), the colonized substrate is placed into a moulding form and mixed with 3 wt. % of the wheat flour as the nutrient material (3:100 ratio of the nutrient material and the substrate), where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

Further possible combinations of the substrate, the fungal species, the nutrient materials and the porous carriers are listed in Example 3 above.

Alternatively, the nutrient material can be mixed with the hemp hurd and fungal spawn of *P*. *ostreatus* in step 2 instead of step 3 to improve and accelerate the initial colonization, and in the same ratio. Although the substrate and water can sustain the initial colonization in step b. even without the nutrient material, the nutrient material is to be added at some point during the colonization.

The final mycelium-based structure comprises: 15 wt. % of the mycelium, 55 wt. % of the substrate and 30 wt. % of the porous carrier.

### Example 6

A two-step colonization method can be performed as follows:
1. Hemp hurd (the substrate) is supplied clean and together with biochar as the porous carrier, they are soaked in water until they reach app. 65-70% moisture content.
2. In two separate inoculation bags, buckets or containers (preferably sterile), the hemp hurd and the biochar are mixed with fungal spawn. Mixture A with fungal spawn of *P. ostreatus* and mixture B with fungal spawn of *P. pulmonarius.* Each mixtures comprises 50 wt. % of the hemp hurd, 15 wt. % of the respective fungal spawn and 35 wt. % of the biochar.
3. After 6-8 days of colonization (meaning at least 5 days), the two separately colonized substrates are combined in equal (50-50%) weight portions and mixed with 3 wt. % of the wheat flour as the nutrient material (3:100 ratio of the nutrient material and the total substrate). The new mixture is then placed into a moulding form, where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

Alternatively, the nutrient material can be mixed with the hemp hurd, biochar and fungal spawn of *P. ostreatus* in mixture A and with the hemp hurd, biochar and fungal spawn of *P*. *pulmonarius* in mixture B in step 2 instead of step 3 to improve and accelerate the initial colonization, and in the same ratios. Although the substrate and water can sustain the initial colonizations in step b. even without the nutrient material, the nutrient material is to be added at some point during the colonization.

The final mycelium-based structure comprises: 20 wt. % of the mycelium, 45 wt. % of the substrate and 35 wt. % of the porous carrier.

### Example 7

A two-step colonization method can be performed as follows:
1. Hemp hurd (the substrate) is supplied clean and together with biochar as the porous carrier, they are soaked in water until they reach app. 65-70% moisture content.
2. In two separate inoculation bags, buckets or containers (preferably sterile), the hemp hurd and the biochar is mixed with fungal spawn. Mixture A with fungal spawn of *G*. *lucidum* and mixture B with fungal spawn of *P. pulmonarius.* Each mixtures comprises 50 wt. % of the hemp hurd, 10 wt. % of the respective fungal spawn and 40 wt. % of the biochar.
3. After 6-8 days of colonization (meaning at least 5 days), the two separately colonized substrates are combined in equal (50-50%) weight portions and mixed with 3 wt. % of the wheat flour as the nutrient material (3:100 ratio of the nutrient material and the total substrate). The new mixture is then placed into a moulding form, where it requires 5-7 additional days (meaning at least 3 days) to fully colonize.
4. Once colonization is complete, the moulding form is removed, and the structure is dried in an oven. First for 4 hours at 45 °C with the oven door slightly open to reduce moisture, followed by 3 hours of baking at 90 °C with the door closed.
5. The final structure is fully dried, ensuring no living mycelium remains.

As an alternative example to Examples 6 and 7, other possible and compatible combinations with any of the substrate specified above include: *P*. *ostreatus* and *P. populinus, P. ostreatus* and *P*. *eryngii, P. ostreatus* and *G. lucidum, P. ostreatus* and *T. versicolor, P. ostreatus* and *P*. *chrysosporium, P. ostreatus* and *L. edodes, P*. *ostreatus* and *H. ulmarius, P. pulmonarius* and *P*. *populinus, P. pulmonarius* and *P. eryngii, P. pulmonarius* and *T. versicolor, P. pulmonarius* and *P. chrysosporium, P. pulmonarius* and *L. edodes, P. pulmonarius* and *H. ulmarius, P. populinus* and *P. eryngii, P. populinus* and *G. lucidum, P. populinus* and *T. versicolor, P. populinus* and *P*. *chrysosporium, P. populinus* and *L. edodes, P. populinus* and *H. ulmarius, P. eryngii* and *G*. *lucidum, P. eryngii* and *T. versicolor, P. eryngii* and *P. chrysosporium, P. eryngii* and *L. edodes, P. eryngii* and *H. ulmarius, G. lucidum* and *T. versicolor, G. lucidum* and *P*. *chrysosporium, G. lucidum* and *L. edodes, G. lucidum* and *H. ulmarius, T. versicolor* and *P*. *chrysosporium, T. versicolor* and *L. edodes, T. versicolor* and *H. ulmarius, P. chrysosporium* and *L. edodes, P. chrysosporium* and *H. ulmarius, L. edodes* and *H. ulmarius.*

Within the context of Examples 6 and 7, mixture A can comprise fungal spawn of *P*. *ostreatus* and *G. lucidum* in a 1:99 to 99:1 (such as 1:9, 1:5, 1:4, 1:3, 1:2, 1:1, 2:1, 3:1, 4:1, 5:1 or 9:1) weight ratio.

Alternatively, the nutrient material can be mixed with the hemp hurd, biochar and fungal spawn of *G*. *lucidum* in mixture A and with the hemp hurd, biochar and fungal spawn of *P*. *pulmonarius* in mixture B in step 2 instead of step 3 to improve and accelerate the initial colonization, and in the same ratios. Although the substrate and water can sustain the initial colonizations in step b. even without the nutrient material, the nutrient material is to be added at some point during the colonization.

The final mycelium-based structure comprises: 15 wt. % of the mycelium, 45 wt. % of the substrate and 40 wt. % of the porous carrier.

### Example 8

The biochar used in Examples 3 to 7 can be soaked with a solution of ammonium phosphate prepared from an aqueous mixture of 2 wt. % ammonium sulphate and 1 wt. % calcium dihydrogen phosphate hydrate (commonly known as triple superphosphate). 2 kg of biochar in a vessel can be submerged completely with the above aqueous ammonium phosphate solution (10 l of water, 200 g ammonium sulphate, 100 g calcium dihydrogen phosphate hydrate), soaked for 24-48 hours and then filtered off and air-dried. Generally, the longer the soaking period, the greater the amount of nutrients impregnated in the porous carrier. The nutrient-impregnated biochar is then used as a substrate in combination with the hemp hurd of Examples 3 to 7. It is inserted inside the colonization mixture in the moulding form such that it does not contact the surface of the structure.

### Example 9

The biochar used in Examples 3 to 7 can be soaked with an aqueous solution of a multi-macro-element mineral fertilizer comprising: 10.0 wt. % total nitrogen (N), 5.0 wt. % P₂O₅, 10.0 wt. % K₂O, 9.48 wt. % CaO, 6.64 wt. % MgO, 25.26 wt. % SO₃, 1.0 wt. % Fe. The measured pH of the solution was 6.7. The electrical conductivity (EC) was approximately 13 mS/cm. 200 g of biochar in a vessel can be submerged completely with the above aqueous solution (7 litres), soaked for 24-48 hours and then filtered off and air-dried. Generally, the longer the soaking period, the greater the amount of nutrients impregnated in the porous carrier. The nutrient-impregnated biochar is then used as a substrate in combination with the hemp hurd of Examples 3 to 7. It is inserted inside the colonization mixture in the moulding form such that it does not contact the surface of the structure. The fungal strain used can be *G*. *lucidum.*

### Example 10

A 3D printing method can be performed as follows:
1. Spent coffee grounds (the substrate) is supplied clean and together with biochar as the porous carrier, they are soaked in water until they reach app. 50-75% moisture content.
2. In an inoculation bag, bucket or container (preferably sterile), the spent coffee grounds and the biochar are mixed with wheat flour as the nutrient material, xanthan gum (or any suitable rheology modifier) and fungal spawn of *G*. *lucidum.* The mixture comprises 40-50 wt. % of the spent coffee grounds, 10-15 wt. % of flour, 0.5-2 wt. % of xanthan gum, 22-27 wt. % water, 3-7 wt. % of the fungal spawn and up to 10 wt. % of the biochar.
3. The mixture is placed into a 3D printing device before colonization and the structure is printed therefrom.
4. The printed structure is allowed to colonize with mycelium for 10 days (meaning at least 8 days)
5. Once colonization is complete, the structure is air-dried at ambient temperature for at least 24 hours. The final structure is fully dried, ensuring no living mycelium remains.

For other possible combinations see Example 3 above.

### Example 11

The above-described mycelium-based structure can be used for agricultural soil improvement.

For general field crops or lawn applications, the structures (such as pellets) could be broadcast on the soil surface by hand or using a spreader. If using a mechanical spreader, a drop spreader (which drops pellets by gravity in a controlled pattern) may be preferable to a centrifugal "spinner" type spreader. High-velocity fling spreaders might impart forces that cause brittle pellets to shatter on impact with the spinner fins or when hitting the ground. Testing would determine if pellets can withstand those forces; if not, drop spreading or a lower-velocity pneumatic system would ensure intact delivery.

The structures could be placed in bands along a crop row or as a side-dress fertilizer next to growing plants. For example, when planting row crops, one could drop pellets at intervals in the furrow or alongside seedlings. Agricultural equipment could be calibrated to drop a pellet at a certain distances, or continuously feed pellets into an open furrow that is then covered with soil. The advantage of shallow burial (a few centimetres deep) is that pellets would be in good contact with moist soil and less exposed to surface elements (and also not visible to birds or rodents that might be consume them).

In orchard or tree planting, one might put a few pellets in the planting hole or around the base of each sapling. For widely spaced plants like trees or vines, a single pellet or a handful of pellets could be applied per plant. Because each pellet is a self-contained depot, this targeted placement works well - e.g. one pellet per planting hole ensures each seedling has immediate access to nutrients and organic matter as it establishes.

The pellets could also be used in controlled environments. For instance, in container gardening or nursery pots, a pellet can be mixed into the potting soil to act as a slow-release fertilizer. Since the pellet is organic, it won't "burn" plant roots like an overly concentrated chemical fertilizer might if placed too close. For turf or lawns, pellets could be top-dressed and will gradually work their way into the soil with watering and worm activity.

### Example 12

The above-described mycelium-based structure can be used for agricultural regeneration and soil restoration on the ground. A freestanding or partially buried structure placed on the ground is designed to support grassland rehabilitation. The structure is embedded with native wildflower seed capsules to regenerate local vegetation and foster pollinator-friendly environments. Being fully biodegradable, the structure decomposes into the soil, leaving no waste while contributing to soil health. It promotes ecological restoration by creating biodiversity hotspots that attract wildlife and support ecosystem services like pest control and pollination for surrounding agriculture.

Examples of ground applications include grasslands and prairies, forest floors (temperate, tropical, boreal), wetlands (edges and transitional zones, arctic and sub-arctic wetlands for migratory birds), deserts (as microhabitats for small creatures), riverbanks and stream edges, agricultural fields (supporting pollinators), parks and urban green spaces and restoration sites (post-mining, deforested areas). If used in extremely cold applications (arctic and sub-arctic), cold-resistant and moisture-absorbing mycelium variants can be used, ensuring slow decomposition in cold environments. If used in extremely warm applications (deserts), textured surface and internal microclimate design allow moisture retention in arid regions, capture humidity and provide shelter for heat-sensitive desert species.

### Example 13

The above-described mycelium-based structure can be used for agricultural regeneration and soil restoration underground. Over time, the structure decomposes underground, enriching the soil with organic nutrients and fostering vegetation growth. If deployed near tree roots, agricultural fields and degraded soils, it supports microbial networks, stabilizes loose soil and can even prevent landslides.

Examples of underground applications include soil improvement (enriching soil microbiota and fungi networks), root zone restoration when placed near tree roots to enhance soil aeration and microbial activity, underground insect colonies (ground-nesting bees, wasps or ants), erosion control (as buried forms can stabilize loose soils and prevent landslides in vulnerable areas), and in agricultural applications, such as embedded in degraded farmland to restore fertility and support underground biodiversity.

### Example 14

The above-described mycelium-based structure can be used for agricultural regeneration and soil restoration underwater, such as in freshwater bodies (lakes, rivers, ponds), coastal marine environments, coral reefs and artificial reefs (such as temporary substrate for coral larvae and marine life colonization), brackish water zones (estuaries, lagoons), seagrass meadows, mangrove root systems, aquaculture farms (as habitat enhancements), fish nurseries or underwater rock formations.

The porous texture of the structure encourages biofouling, where algae, barnacles, mussels and other marine organisms attach to surfaces. Biofouling provides additional food and habitat resources for filter feeders and grazing species, enhancing biodiversity. Surface textures are optimized for biofouling, ensuring natural or artificial colonization by mussels, barnacles and corals (such as in aquacultural applications). Optimization can also include lack of further surface processing, leaving the structure naturally rough. Marine-adapted designs can resist wave motion while supporting species attachment (such as by anchoring).

In seaweed aquaculture (e.g., kelp, Saccharina, Laminaria, Ulva), cultivation typically relies on ropes, lines, or nets where algae attach. The mycelium-based structure acts as: a temporary attachment substrate for algal spores; a microhabitat surface encouraging early colonization; and a biodegradable carrier attached to aquaculture lines. Advantages of the structure are a rough, porous surface, biodegradability, no plastics released. The structure can be integrated as clipped onto kelp ropes, suspended from aquaculture lines or used in hatchery-to-sea transfer systems.

In marine restoration, artificial structures are used to encourage colonization by: barnacles, mussels, oysters, algae and microbial biofilms. The porous surface and the cavities of the mycelium-based structure provide settlement surfaces, micro-refugia for small invertebrates and temporary reef scaffolding. Over time the structure degrades and is replaced by biological colonization.

The porous carrier in the mycelium-based structure also functions as a temporary nutrient adsorption matrix in water, such as for adsorption of ammonium or phosphate, microbial biofilm support or gradual nutrient cycling. This can be used in aquaculture ponds, recirculating aquaculture systems and nutrient-rich coastal areas.

In shellfish aquaculture, spat collectors are commonly used and traditionally made of plastic mesh, ropes or limestone. A biodegradable porous spherical mycelium-based structure could act as a spat settlement carrier. This is advantageous because of rough surface, biodegradability and no plastic debris.

Small cavities in a porous spherical mycelium-based structure can act as micro shelter for juvenile fish, shrimp and crustaceans. This is particularly useful in seagrass restoration zones, lagoon habitats and mangrove restoration.

When placed on soft sediment, the mycelium-based structure can trap sediment to promote microbial colonization and stabilize substrate for vegetation. This can be used in seagrass restoration, salt marsh edges and tidal flats.

### Example 15

The above-described mycelium-based structure can be used for agricultural regeneration and soil restoration by floating in the water, such as in freshwater (lakes, rivers, reservoirs), saltwater (seas, oceans), wetlands (marshes, swamps, peatlands), offshore wind farms, floating islands (man-made or natural clusters), calm bays and inlets, fishery zones (for attracting fish or birds), docks, piers, marinas, fish ladders.

Buoyant yet biodegradable, the structure initially floats, providing temporary habitat and resting spots for aquatic birds, amphibians, and insects. As it absorbs water, which strongly depends on the density of the surface layer of the structure, the structure transitions into a semi-submerged or fully submerged phase, supporting fish, invertebrates, and aquatic vegetation. As the structure degrades, it releases organic nutrients (carbon, nitrogen, phosphorus) that promote primary productivity and microbial activity. Buoyancy-adjusted biodegradable material composition ensures gradual sinking or floating stability over time. Structural designs are tailored to provide stability in both freshwater and marine environments.

The structure can be attached to floating solar panels, wind farm pylons or artificial reefs, providing dual ecological and engineering benefits. It acts as both a stabilizing structure and a biodiversity booster, fostering habitats around renewable energy projects. Unique surface morphology is optimized for colonization by marine species such as sponges, corals and small crustaceans, even in aquacultural applications. Wave-resistant stabilization techniques (such as anchoring) ensure the structure remains secure in dynamic environments.

If the density allows buoyancy initially, the mycelium-based structures could function as micro floating wetland elements. This can be used for small floating habitat patches, support for emergent plants and shoreline stabilization. Over time the floating structure becomes semi-submerged and is further integrated into sediment.

### Industrial applicability

The mycelium-based structure according to the present invention can be used for habitat restoration. The mycelium-based structure according to the present invention can further be used for a small-scale precise nutrient targeting or a large-scale ecological restoration project aimed at combating desertification or soil degradation, such as in areas affected with deforestation, overgrazing or mining.

### List of reference signs

- 31: matrix
- 32: scattered bits
- 33: outer shell
- 34: inner core
- 35: capsule

## Claims

1. A mycelium-based structure for agricultural regeneration and soil restoration by remote deployment, comprising: mycelium of at least one fungus; a substrate of discrete particles bonded together by the mycelium, wherein the substrate comprises biomass; and a porous carrier, **characterised in that** the structure comprises: 1 to 20 wt. % of the mycelium, 10 to 85 wt. % of the substrate and 1 to 85 wt. % of the porous carrier.

2. The mycelium-based structure according to claim 1, **characterised in that** the fungus is any of *Pleurotus ostreatus, Pleurotus pulmonarius, Pleurotus populinus, Pleurotus eryngii, Ganoderma lucidum, Trametes versicolor, Phanerochaete chrysosporium, Lentinula edodes, Hypsizygus ulmarius* or a combination thereof.

3. The mycelium-based structure according to claim 1 or 2, **characterised in that** it comprises mycelium of *Pleurotus ostreatus* and *Pleurotus pulmonarius* or **in that** it comprises mycelium of *Ganoderma lucidum* and *Pleurotus pulmonarius.*

4. The mycelium-based structure according to any of the previous claims, **characterised in that** the shape of the mycelium-based structure is selected from spherical, cylindrical, ellipsoidal, hemispherical, polygonal, a granule or a pellet.

5. The mycelium-based structure according to any of the previous claims, **characterised in that** the substrate is selected from a group consisting of hemp, hemp hurd, straw, hay, wood sawdust, wood chips, bagasse, corn husks, corn cobs, coconut coir, spent coffee grounds or a combination thereof.

6. The mycelium-based structure according to any of the previous claims, **characterised in that** the porous carrier is selected from biochar, activated carbon, lignite-derived humic acid or a derivative thereof, zeolite, diatomaceous earth, perlite, vermiculite, bentonite, montmorillonite, pumice, basalt or a combination thereof.

7. The mycelium-based structure according to any of the previous claims, **characterised in that** the porous carrier is impregnated with at least one nutrient selected from nitrogen, phosphorous, potassium, magnesium, calcium, sulphur, zinc, manganese, iron, copper, boron, molybdenum or a combination thereof, and/or with at least one soil amending agent selected from nitrogen-fixing bacteria, phosphate-solubilising bacteria, plant growth-promoting rhizobacteria, a mycorrhizal fungi, algae, cyanobacteria, compost tea, decomposing fungi, nematodes, protozoa or microbial consortia.

8. The mycelium-based structure according to any of the previous claims, **characterised in that** the structure comprises: 5 to 15 wt. % of the mycelium, 45 to 75 wt. % of the substrate and 10 to 40 wt. % of the porous carrier.

9. The mycelium-based structure according to any of the previous claims, **characterised in that** it comprises an inner core comprising the porous carrier, and an outer shell comprising the mycelium and the substrate, wherein the inner core comprises a plurality of separate compartments for the porous carrier with different nutrient types and/or soil amendments and/or the inner core comprises multiple layers of the porous carrier, mycelium and substrate.

10. The mycelium-based structure according to any of the previous claims, **characterised in that** the outer surface of the mycelium-based structure is modified with grooves, ridges or perforations and/or **in that** the mycelium-based structure comprises at least one through-hole and/or a cavity.

11. The mycelium-based structure according to any of the previous claims, **characterised in that** it comprises any of the following: plant seeds; fungal spores; insect eggs; or insect larvae, embedded in the structure and/or **in that** it comprises an outer protective coating, optionally made from cutin and/or beeswax.

12. The mycelium-based structure according to any of the previous claims, **characterised in that** it comprises any of the following wireless electronics (13) for collecting data on habitat restoration: a camera, a microphone, an acoustic sensor, a motion sensor, a temperature sensor, a humidity sensor and/or a light intensity sensor.

13. A method for production of the mycelium-based structure according to any of claims 1 to 12, **characterised in that** it comprises the following steps:
a. soaking the substrate, and optionally the porous carrier, in water to 60 to 75 % moisture content;
b. mixing 10 to 80 wt. % of the substrate and 1 to 85 wt. % of the porous carrier with 5 to 15 wt. % of fungal spawn of at least one fungus as a mycelium precursor and with up to 5 wt. % of a nutrient material digestible by the at least one fungus;
c. placing the mixture in a moulding form and allowing the mycelium to colonise the substrate from the mycelium precursor by digesting the nutrient material for a total colonisation time of at least 8 days;
d. drying the mycelium at 40 to 50 °C for 3 to 5 hours, then at 85 to 95 °C for 2 to 4 hours to obtain the mycelium-based structure.

14. The method according to claim 13, **characterised in that**
a. in step b., the substrate and the porous carrier is mixed with the fungal spawn as a mycelium precursor and optionally with the nutrient material in a container to form a mixture, allowing the mycelium to colonise the substrate from the mycelium precursor at least for 5 days; and
b. in step c., the mixture is transferred from the container in a moulding form, optionally mixed with the nutrient material and the mycelium is allowed to further colonise at least for 3 more days, wherein the nutrient material is added in step b. and/or in step c.

15. The method according to claim 13 or 14, **characterised in that**
a. in step b.
i. a first portion of the substrate and the porous carrier is mixed with fungal spawn of *Pleurotus ostreatus* and/or *Ganoderma lucidum* as a first mycelium precursor and optionally with the nutrient material to form a mixture A in a first container, allowing the mycelium to colonise the substrate from the first mycelium precursor at least for 5 days; and
ii. a second portion of the substrate and the porous carrier is mixed with fungal spawn of *Pleurotus pulmonarius* as a mycelium precursor and optionally with the nutrient material to form a mixture B in a second container, allowing the mycelium to colonise the substrate from the second mycelium precursor at least for 5 days;
b. in step c., the mixtures A and B are mixed together in a weight ratio of 2:3 to 3:2, placed in a moulding form, optionally mixed with the nutrient material and the mycelium is allowed to further colonise both portions of the substrate from the first and second mycelium precursors at least for 3 more days, wherein the nutrient material is added in step b. and/or in step c.
